# EUROPEAN PATENT SPECIFICATION

(11) **EP 1 475 633 B1**
(45) Date of publication and mention of the grant of the patent: **01.12.2010**
(21) Application number: 03701775.3
(22) Date of filing: 17.01.2003
(51) Int. Cl.: G01N 29/04, F16C 33/30

(54) **METHOD FOR EVALUATING LARGE-SIZED INCLUSIONS IN A STEEL FOR USE IN BEARING**
VERFAHREN ZUR BEWERTUNG GROSSER EINSCHLÜSSE IN EINEM STAHL ZUR VERWENDUNG IN LAGER
PROCEDE D'EVALUATION D'INCLUSIONS DE GRANDES DIMENSIONS DANS UN ACIER DESTINE A ETRE UTILISE EN ROULEMENT

(30) Priority: 17.01.2002 JP 2002009088; 30.05.2002 JP 2002157492; 07.10.2002 JP 2002293750
(43) Date of publication of application: 10.11.2004
(73) Proprietor: NSK LTD., Shinagawa-ku, Tokyo 141-8560 (JP)
(72) Inventor: KIUCHI, Akihiro, Fujisawa-shi, Kanagawa 251-8501 (JP); ISHII, Yutaka, Fujisawa-shi, Kanagawa 251-8501 (JP); MATSUM0TO, Youichi, Fujisawa-shi, Kanagawa 251-8501 (JP); KAWABE, Masaru, Fujisawa-shi, Kanagawa 251-8501 (JP); NARAI, Hiroshi, Fujisawa-shi, Kanagawa 251-8501 (JP); YOKOYAMA, Nancy Naoko, Fujisawa-shi, Kanagawa 251-8501 (JP)
(74) Representative: Klingseisen, Franz
(86) International application number: PCT/JP2003/000380
(87) International publication number: WO 2003/060507

(56) References cited:
- JP-A- 11 337 530
- JP-A- 63 256 846
- JP-A- 2000 109 948
- JP-A- 2000 214 142
- JP-A- 2001 065 560
- JP-A- 2001 240 937
- JP-A- 2002 317 821

## Description

### Technical Background

The present invention concerns a method of evaluating large-sized inclusions.

### Background Art

Heretofore, it has been well-known that large-sized non-metal inclusions (hereinafter referred to as large-sized inclusions) present on the surface of a bearing ring and just below the surface have a great effect on the life of the rolling bearing under a lubrication environment where no obstacles intrude.

Since the cleanliness of metal materials such as steels as the material of rolling bearings has been improved greatly by the recent improvement of metallurgy, the large-sized inclusions present in the metal materials have been decreased further, and the size of the large-sized has also been decreased.

With the situation described above, it has become rather difficult to quantitatively detect the large-sized inclusions formed incidentally or at an extremely low probability, and a demand has been increased for the method of evaluating the cleanliness of metal materials that can exactly detect the large-sized inclusions.

Among the evaluation methods for the cleanliness of the metal materials, a most general method is an evaluation method by the amount of oxygen in steel. However, since the amount of oxygen in metal materials has been improved greatly and stabilized at a low level in recent years, the evaluation method according to the amount of oxygen in steel is not useful for judging the adequacy of the amount of the large-sized inclusions.

Further, other quantitative evaluation method for the cleanliness of metal materials include a method of using an optical microscope according to JIS (Japanese Industrial Standards Society) or ASTM (American Society for Testing and Materials) and a method of defining the number of hard inclusions such as oxide series inclusions mainly comprising Al₂O₃ and Ti series inclusions present in a predetermined area of a steel material by an extremal value statistic method based on the data obtained by the above-mentioned method

(refer, for example, to Document 1 (Japanese Unexamined Patent Publication No. Hei 6-145883), Document 2 (Japanese Unexamined Patent Publication No. Hei 3-56640), Document 3 (Japanese Unexamined Patent Publication No. Hei 5-117804), and Document 4 (Japanese Unexamined Patent Publication No. Hei 6-192790)). However, according to the evaluation method by the microscopic observation as described in Document 1 to Document 4, it is difficult to detect a small number of large-sized inclusions since the inspection area is as small as several hundreds mm².

Further, other quantitative evaluation methods for the cleanliness of metal materials include a method of extracting inclusions from a metal material by acid solution and evaluating the grain size and the number of the inclusions by a microscope (for example, refer to Document 5 (Japanese Unexamined Patent Publication No. Hei 9-125199)) and a method of melting a metal material by an EB melting method and observing floated risen inclusions by a microscope (refer to Document 6 (Japanese Unexamined Patent Publication No. Hei 9-125200)). However, in the evaluation method described in Document 5 and Document 6, the volume for inspection is about several thousands mm³ and it can not be said effective for the evaluation of large-sized inclusions. Further, in the method described in Document 5 or Document 6, non-destructive test can not be conducted, and it may be a worry that large-sized inclusions are dissolved in an acid or the large-sized inclusions per se are melted and agglomerated, so that it can not be utilized for the evaluation of large-sized inclusions present in metal materials having high cleanliness.

Then, none of the evaluation methods for the cleanliness of the metal material can not conduct the test non-destructively, but they inspect a typical sample of a steel material lot and evaluate the life of rolling bearings manufactured from the steel material lot. Accordingly, since the large-sized inclusions present in the rolling bearings as the products can not be evaluated individually, it is not possible to accurately evaluate the short life products that are produced scarcely.

Further, as a method of evaluating large-sized inclusions in metal materials by using ultrasonic flaw detection, according to Document 7 (Japanese Unexamined Patent Publication NO. 2000-141704), it has been proposed to use a high frequency probe (flaw detection frequency = 50 MHz to 100 MHz) and conduct the extremal value statistic method of evaluation by using an optical microscope so far, but it is also difficult to evaluate as far as large-sized inclusions of a sufficient size when the inspected volume is small.

Then, in a case where the large-sized inclusions in the steel for use in bearing can not be evaluated quantitatively, this can not evaluate occurrence, although seldom, of those bearings which are fractured in a short life originated from the large-sized inclusions. That is, unless an appropriate evaluation method for large-sized inclusions can be found, the steel for use in bearing itself can not be evaluated quantitatively.

That is, it can not yet be attained at present a high cleanliness evaluation method for a metal material capable of one hundred percent inspection of rolling bearings as products and capable of reliably evaluating few large-sized inclusions present in metal materials having high cleanliness.

On the other hand, the load and the surface pressure have been increased and the rolling facilities has been down-sized in iron and steel facilities, and a demand for higher temperature has become severer, for example, in paper making facilities.

For example, rolling bearings for iron and steel working typified by roll neck bearings are used under heavy load and high surface pressure. Rolling facilities have been down-sized recently and housings in which bearings are inserted have been also miniaturized. In a case, where the rigidity of the housing is insufficient, for instance, the bearing conforms the housing and repetitive bending stresses exert on the outer ring to possibly result in occurrence of short life products or cracking.

Further, the inner ring of the rolling bearing for use in paper making machines is used in a state undergoing fitting stress, and a larger hoop stresses have sometimes exerted on the bearing under an environment where higher temperature is used in recent years. For example, in a case where the hoop stress exerts on an inner ring, the maximum tensile stress is generated at the surface of the inner diametrical surface and the tensile stress decreases toward the inside. If a defect comprising such as large-sized inclusions is present on the way, the stress concentration to the portion increases to cause cracking.

For example, in iron and steel facilities or paper making facilities adopting the production system where line inspection and maintenance are conducted at given time intervals, if short life products or cracked products should occur, the line is obliged to be stopped to incur enormous loss. Accordingly, prolonged life, as well as elimination of accidentally occurring short life products or cracked products have been demanded for the rolling bearings used in such iron and steel facilities or paper making facilities.

In view of the situations described above, countermeasures have been adopted so far such as application of surface treatment, for example, carburizing to the surface of a rolling bearing thereby applying a compressive stress to the surface so as to avoid cracking (for example, refer to Document 8 (Japanese Unexamined Patent Publication No. Hei 6-307457)).

Further, for detecting crack-inducing defects, operations of conducting one hundred percent inspection by an ultrasonic flaw detection method after rolling and removing defects such as macro-streak-flaws or voids have been conducted in steel manufacturers, so that large defects have been eliminated (for example, refer to Document 9 (Special Steel, Vol. 46, No. 6, p 31, edited by Corporation of Special Steel Club).

However, inspection by the ultrasonic flaw detection method conducted in steel manufacturers is practiced generally by scanning along the axial direction in the stage of products, such as steel pipes or round bars. Since the inspection pitch in the axial direction can be made finer by lowering the inspection speed, finer defects can be detected but this results in a problem of requiring a longer time for the inspection. Further, referring to the frequency used for the flaw detection, while smaller defects can be detected as the frequency is higher according to the flaw detection principle, sonic waves are decayed more relative to the flaw detection distance in a case where the frequency is made higher to result in a problem of narrowing the flaw detection range.

Accordingly, the ultrasonic flaw detection method adopted in the steel manufacturers has been conducted in view of the productivity at a speed of several tens m/min in a slower case and at a speed of exceeding 100 m/min in a faster case as the inspection speed required for flaw detection. Further, since it is necessary to inspect with a good general utilizability for larger and smaller diameters of the steel materials, it is desirable to select the frequency used for the flaw detection at several MHz or higher and under 10 MHz with less decay of sonic waves to the direction of the depth.

However, since the ultrasonic flaw detection method conducted in the steel manufacturers is high speed flaw detection conducted at a high inspection speed required for the flaw detection as described above while rotating a probe or a steel material, it involves a problem of tending to cause miscellaneous noises and not capable of enhancing the sensitivity of a flaw detector by so much.

With the reasons described above, defects detectable by the ultrasonic flaw detection method conducted in the steel manufacturers undergo a detection limit as several hundreds µm in the width and about several tens mm in the length.

In the rolling bearing used for example in iron and steel facilities or paper making facilities, it has been found that large-sized non-metal inclusions in the size of several hundreds µm, or defects of inclusions although small individually but agglomerated into a large mass are present at the origination points in those bearings suffering from problem of short life products or cracked products. However, since the ultrasonic flaw detection method conducted in the steel manufacturers is applied to steel pipes or round bars at the surface state with the inspection surface being as rolled, the grain size inside the steel material and the surface layer are coarse to increase miscellaneous noises upon ultrasonic flaw detection, so that defects of a size of about several hundreds µm can not be detected at a high accuracy.

That is, it can not be attained still at present rolling bearings with no worry for the occurrence of short life products or cracked products and having high reliability, even in a case of use under heavy load and high surface pressure as bearings for use in iron and steel working and in a case of use under a severe environment used at high temperature while adding large fitting stress to the inner ring as bearings for use in paper making facilities.

US 6 065 343 representing the closest prior art shows an evaluation method for large-sized inclusions in a steel for use in bearings, comprising locating a round bar formed of a steel for use in bearings as an object of evaluation and an ultrasonic probe in an ultrasonic transmission medium, measuring the size and the number of large-sized inclusions present in a volume for flaw detection by ultrasonic flaw detection. In view of the above, the present invention has been achieved in view of the foregoing situations and it is a subject thereof to provide an evaluation method for large-sized inclusions in a steel for use in bearing capable of quantitatively evaluating large-sized inclusions even at high cleanliness.

This object is attaind by the method according to claim 1.

### Disclosure of the Invention

For solving the subject described above, an evaluation method for large-sized inclusions according to claim 1 of the invention comprises locating a round bar formed of a steel for use in bearing as an object of evaluation and an ultrasonic probe in an ultrasonic transmission medium, measuring the size and the number of large-sized inclusions present in a volume for flaw detection by ultrasonic flaw detection, obtaining a volume for flaw detection in a case where the ratio for the number of inclusions is stabilised, conducting flaw detection for the obtained volume or more, and estimating the probability for the existence of the large-sized inclusions in the steel for use in bearing as the object of evaluation.

The invention is used mainly for comparison and evaluation of charges obtained from different steel making processes and also used for evaluation of different charges obtained from one identical steel making process, or for comparison between the initial stage and the subsequent stage of casting for one identical charge.

Large-sized inclusions at low existence probability are difficult to be detected when inspected for small area or volume. Further, also in the extremal value statistic based on the data, the population comprises medium to small-sized inclusions in a case where the inspected volume is small and it is not suitable to prediction of the large-sized inclusions. Accordingly, for evaluating large-sized inclusions, it is necessary to inspect a large volume. As a result of earnest studies, the present inventors have found that evaluation of large volume is possible by an ultrasonic flaw detection method. For example, in a case of a steel for use in bearing of 36 mmφ × 2 m, the volume corresponds to 2.0 × 10⁶ mm³ in all cross sections for flaw detection, which is enormous. Accordingly, this increases a probability capable of detecting large-sized inclusions which could be detected only seldom by the existent inspection area or inspection volume.

Further, the evaluation method for large-sized inclusions in a steel for use in bearing according to claim 2 of the invention has a feature in the evaluation method for large-sized inclusions in a steel for use in bearing according to claim 1 in that the flaw detection method for ultrasonic flaw detection is an angle beam technique.

Generally, the ultrasonic flaw detection method according to an immersion method using water as an ultrasonic transmission medium includes an angle beam technique and a normal beam technique. The detection limit for the defect in each of the methods is in proportion with the acoustic velocity of waves generated from them respectively. Generally, the angle beam technique uses transverse waves and the normal beam technique uses longitudinal waves. Since the acoustic velocity of the transverse waves propagating through the steel material is about one-half of that of the longitudinal waves, the detection limit using the transverse waves is about one-half of that of the longitudinal waves. That is, since smaller inclusions can be detected as the acoustic velocity is lower, the angle beam technique using the transverse waves can detect smaller inclusions. As will be described later, since the size even of a large-sized inclusion is about 0.2 mm being represented as the length of the square root, the angle beam technique using the transverse waves is preferred for conducting flaw detection with less leakage and at high accuracy.

Further, an evaluation method for large-sized inclusions according to claim 3 of the invention has a feature in the evaluation method for large-sized inclusions in a steel for use in bearing according to claim 2 in that the angle beam technique is conducted at a flaw detection frequency of 15 MHz or lower.

A relation between the flaw detection frequency and the detection limit for the defect is considered as 1/2 to 1/4 of the wavelength. Accordingly, while the detection limit is improved as the flaw detection frequency is made higher, the detection depth is decreased since the decay of propagating sonic waves increases. The present invention intends to detect large-sized inclusions of a size deleterious to the bearing life by using the angle beam technique and an optimal flaw detection frequency has been found for obtaining an volume for inspection as large as possible.

Further, an evaluation method for large-sized inclusions according to claim 4 of the invention has a feature in an evaluation method for large-sized inclusions in a steel for use in bearing according to claim 1 in that the flaw detection method for the ultrasonic flaw detection is a normal beam technique using a focus type polymer probe as the ultrasonic probe.

While the angle beam technique can detect smaller inclusions compared with the normal beam technique, since the ultrasonic waves have a nature of deflecting after incidence to a steel material depending on the angle of incidence, it has a limit for identifying an accurate position of a defect portion compared with the normal beam technique. Further, since the ultrasonic waves propagate being inclined to the direction of depth in the angle beam technique, it has a disadvantage that the range for flaw detection depth is shallower compared with that of the normal beam technique. However, it is necessary to increase the frequency for detecting the defect of the same size as that in the angle beam technique by using the normal beam technique and this results in a problem that the ultrasonic waves are decayed significantly in the steel to restrict the flaw detection depth. As a result of earnest studies, the present inventors have found that detection by the normal beam technique is possible by utilizing a polymer probe using a polymer resin for the transducer.

Since the polymer probe is excellent in the damping characteristics upon receiving signals of reflected ultrasonic waves, it has been known to be effective particularly in a case where flaw detection has to be conducted at a high frequency (for example, 50 MHz or higher) since it gives less non-sensitive zone caused by resonance as compared with a case of using a general ceramic transducer. Accordingly, it has not been utilized at present for the frequency band about in the range of the invention. However, when the present inventors have applied the polymer probe to the ultrasonic flaw detection for the steel for use in bearing, it has been found that ultrasonic waves are less decayed even when the frequency is increased compared with the existent ceramic probe and flaw detection can be conducted effectively for a deeper region. That is, since the flaw detection frequency can be made higher, a normal beam technique capable of detecting smaller large-sized inclusions to a deeper region can be adopted. That is, ultrasonic flaw detection for the steel for use in bearing can be conducted accurately for more cross sections. Accordingly, for detecting smaller large-sized inclusions for a wider region, the normal beam technique using the polymer probe is preferred.

Further, an evaluation method for large-sized inclusions according to claim 5 of the invention has a feature in an evaluation method for large-sized inclusions in a steel for use in bearing according to claim 4 in that the normal beam technique is conducted at a flaw detection frequency of 30 MHz or lower.

As described above, as the flaw detection frequency is made higher, while the detection limit is improved, the detection depth is made shallower since the propagating sonic waves are decayed further. The present invention intends to detect large-sized inclusions of a size deleterious to the bearing life to a deeper region by using a normal beam technique, and an optimal flaw detection frequency capable of detecting the large-sized inclusions of smaller size has been found.

### Brief Description of the Drawings

Fig. 1 is a vertical cross sectional view showing a rolling bearing manufactured with a steel for use in bearing according to the present invention.
Fig. 2 is a schematic constitutional view showing an example of an ultrasonic flaw detection inspection apparatus used in the evaluation method for large-sized inclusions in a steel for use in bearing according to the invention.
Fig. 3 is an explanatory view for explaining an angle adjusting method for an angle beam technique and a normal beam technique.
Fig. 4 is an explanatory view showing a relation between the volume for flaw detection and the number of inclusions in the steel for use in bearing
Fig. 5 is an explanatory view showing the difference between the number of inclusions detected by the normal beam technique and the number of inclusions detected by the angle beam technique in the steel for use in bearing where a ceramic is used for the transducer.
Fig. 6 is a transversal cross sectional view showing the state of forming an artificial defect to a round bar made of a steel for use in bearing.
Fig. 7 is an explanatory view showing a relation between the flaw detection frequency and the flaw detection depth in the steel for use in bearing.
Fig. 8 is an explanatory view showing a relation between the flaw detection frequency and the flaw detection length in the steel for use in bearing.
Fig. 9 is a schematic explanation view showing an example of a bearing life tester.
Fig. 10 is an explanatory view for a bearing life on every charge in the steel for use in bearing.
Fig. 11 is an explanatory view showing a relation between the number of inclusions and the bearing life in the steel for use in bearing.
Fig. 12 is an explanatory view showing a relation between the volume for flaw detection and the number of inclusions in the steel for use in bearing.
Fig. 13 is an explanatory view for the bearing life on every charge in the steel for use in bearing.
Fig. 14 is an explanatory view showing a relation between the flaw detection depth and the flaw detection frequency in the steel for use in bearing. .
Fig. 15 is an explanatory view showing a relation between the flaw detection frequency and the flaw detection length in the steel for use in bearing.
Fig. 16 is an explanatory view for the bearing life on every charge in the steel for use in bearing.
Fig. 17 is an explanatory view showing the relation between the volume for flaw detection and the total length of inclusions with a length of 0.5 mm or more present per unit volume in the steel for use in bearing .
Fig. 18 is a perspective view showing a state of forming an artificial defect to a seamless seal pipe made of the steel for use in bearing.
Fig. 19 is a graph showing a relation between the distance (depth) from the surface of a test specimen and a relative echo intensity.
Fig. 20 is a graph showing a relation between the moving range in the circumferential direction of a probe to a test specimen and a relative echo intensity.
Fig. 21 is a graph showing a relation between the distance (depth) from the surface of a test specimen and a relative echo intensity.
Fig. 22 is a graph showing a relation between the moving range in the circumferential direction of a probe to a test specimen and a relative echo intensity.
Figs. 23A and 23B are explanatory views explaining a heat treatment method in which Fig. 23A is for carburized steel and Fig. 23B is for through-hardened steel.
Fig. 24 is a schematic constitutional view showing another example of an ultrasonic flaw detection inspection apparatus used for the evaluation method of large-sized inclusions in the steel for use in bearing.
Fig. 25 is an explanatory view for explaining an inner ring crack life tester.
Fig. 26 is a cross sectional view showing a test piece of the steel for use in bearing used for detecting an artificial defect by an ultrasonic flaw detection method.
Fig. 27 is a graph showing a relation between the outer diametrical surface roughness of a test specimen and the S/N ratio.

### Best Mode for Carrying Out the Invention

Embodiments of the present invention are to be described below.

### < First Embodiment >

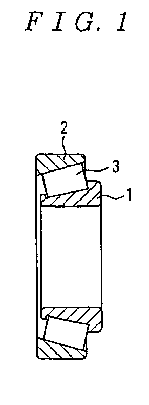

Fig. 1 is a cross sectional view of a rolling bearing manufactured with a steel for use in bearing. The rolling bearing is a tapered roller bearing, with a bearing number of HR 32017 X J having an inner diameter of 85 mmφ, an outer diameter of 130 mmφ and a width of 29 mm. In the drawing, numeral 1 is for an inner ring, numeral 2 is for an outer ring and numeral 3 is for rolling element (tapered roller).

At first, as shown in Table 1, steel for use in bearings from different steel making methods were prepared by four types of charges A, B, C, and D. Table 1 also shows the result of evaluation by the amount of oxygen and the extremal value statistic method together. In the Table, scarce difference was observed for the amount of oxygen (measured by an inert gas melting combustion method).

Further, no significant difference was observed also for the result of the extremal value statistic method showing by the square root length of the area of the maximum inclusions present in 3 × 10⁴ mm², estimated by the extremal value statistic method by inspecting within 10 mm × 10 mm × 30 view fields. Further, in the result of the extremal value statistic method, presence of the large-sized inclusions in the order of the square root length of 0.2 mm as an object of the invention was not found. Further, the extremal value statistic method is described specifically in "Effects of fine defects and inclusions" (written by Yukitaka Murakami, published from Youkendo). Further, oxide series inclusions and sulfide series inclusions are targets for the large-sized inclusions shown in this embodiment, and large-sized inclusions mentioned below also have the same meanings.

Then, the steel for use in bearings for the respective charges described above are evaluated by the ultrasonic flaw detection method.

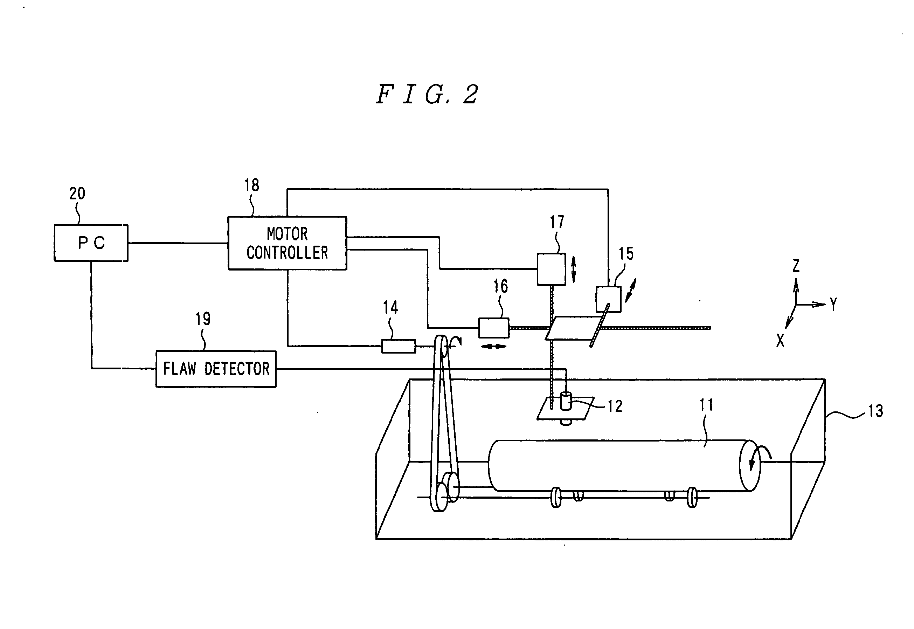

Fig. 2 shows a schematic constitutional view of an ultrasonic flaw detection inspection apparatus used for the evaluation method of large-sized inclusions in the steel for use in bearing according to the invention. In the drawing, numeral 11 is for a round bar made of a steel for use in bearing as an object of evaluation. Further, numeral 12 is for a focus type ultrasonic probe, which is immersed together with the round bar 11 in a water tank 13 storing water as an ultrasonic wave transmission medium. The size of the round bar 11 is to be described specifically later.

The round bar made of the steel for use in bearing as the target for evaluation is rotated to a predetermined direction by a motor 14 and the ultrasonic probe 12 is moved by motors 15, 16 and 17 in the direction of axes: X-Y-Z axis shown in the drawing, and flaws are detected for a predetermined volume to detect large-sized inclusions. Each of motors 14 to 17 is driven by a motor controller 18, and detection signals from the ultrasonic probe 12 are analyzed by a flaw detector 19. The motor controller 18 is controlled for the operation by the input to a personal computer 20. The motor controller 18 controls the positional relation between the probe 12 and the round bar 11 by controlling the rotational direction, the rotational speed and the rotational angle for each of the motors 14 to 17. Further, the flaw detector 19 monitors the size of the inclusions detected based on the flaw detection frequency and the reflection echo of the probe 12 and the intensity of the reflection echo and stores them in the memory of the personal computer 20.

As has been described above, the ultrasonic flaw detection method used for the method of the invention includes the normal beam technique and the angle beam technique. In a case where the inspected object is a round bar and the transmitting direction of ultrasonic waves by the probe is vertically below, flaw detection is conducted by the normal beam detection method while setting the probe just above the center line. On the contrary, flaw detection is conducted in the angle beam technique by displacing the probe from the center line for the round bar (offset). The angle of incidence of the ultrasonic waves in the angle beam technique is determined by an inverse sine for the value obtained by dividing the quantity of offset with the radius of the round bar, and it is inputted to the personal computer and controlled by the motor controller.

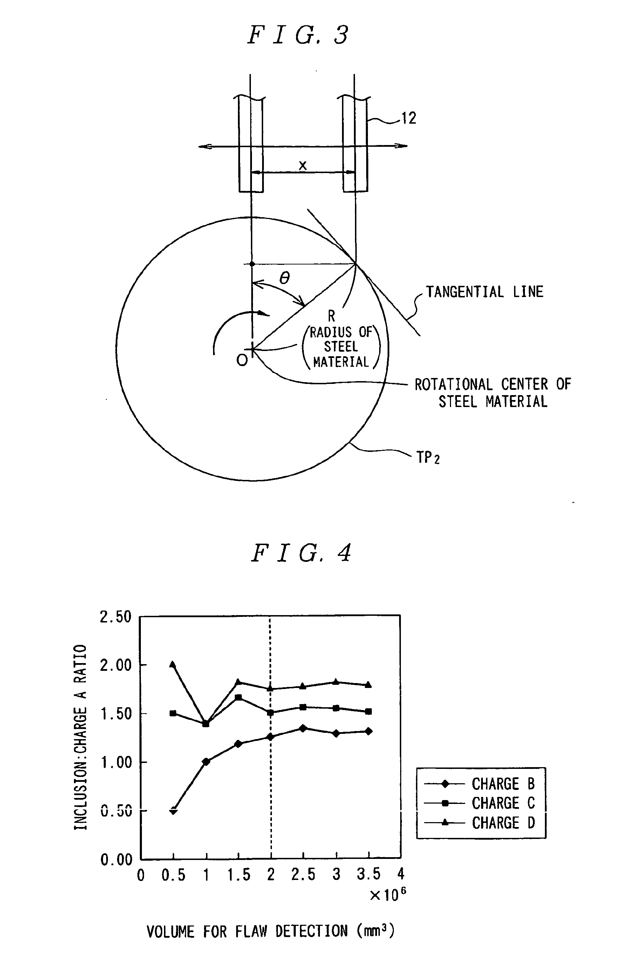

Then, for the angle control in the angle beam technique and the normal beam technique, as shown in Fig. 3, the ultrasonic probe 12 is fed by x in the direction of perspective depth to control θ to a desired angle (angle θ = 19° ). In view of the drawing, sinθ = x/R from the relation: Rsinθ = x and, accordingly, θ = sin⁻¹(x/R). Since the outer radius R of a test specimen TP1 is previously known, x can be determined primarily in view of the relation with θ.

Using the ultrasonic flaw detection inspection apparatus, the steels for use in bearing for the respective charges described above were subjected to ultrasonic flaw detection. In this case, the angle beam technique was used as the ultrasonic flaw detection method and flaw detection was conducted at a flaw detection frequency of 10 MHz, with an angle of incident of ultrasonic waves to the steel for use in bearing at 19° and for a volume for flaw detection of 3.5 × 10⁶ mm³, and the number and the position of the detected inclusions were determined.

Fig. 4 shows a relation between the volume for flaw detection and the number of inclusions in the steel for use in bearing. The number of inclusions was shown by the ratio between that of the charge A and that of other charges B to D. As apparent from the drawing, while the ratio of the number of inclusions is varied in a case where the volume for flaw detection is smaller but the ratio for the number of inclusion is stabilized as the volume for flaw detection increases and becomes substantially constant in a region of the volume for flaw detection of 2.0 × 10⁶ mm³ or more. As the volume for flaw detection increases, while the time for flaw detection increases but reliability can be increased by flaw detection for the volume of 2.0 × 10⁶ mm³ or more, so that the volume for flaw detection in this embodiment is set as 2.0 × 10⁶ mm³.

Then, the normal beam technique and the angle beam technique described above are to be compared.

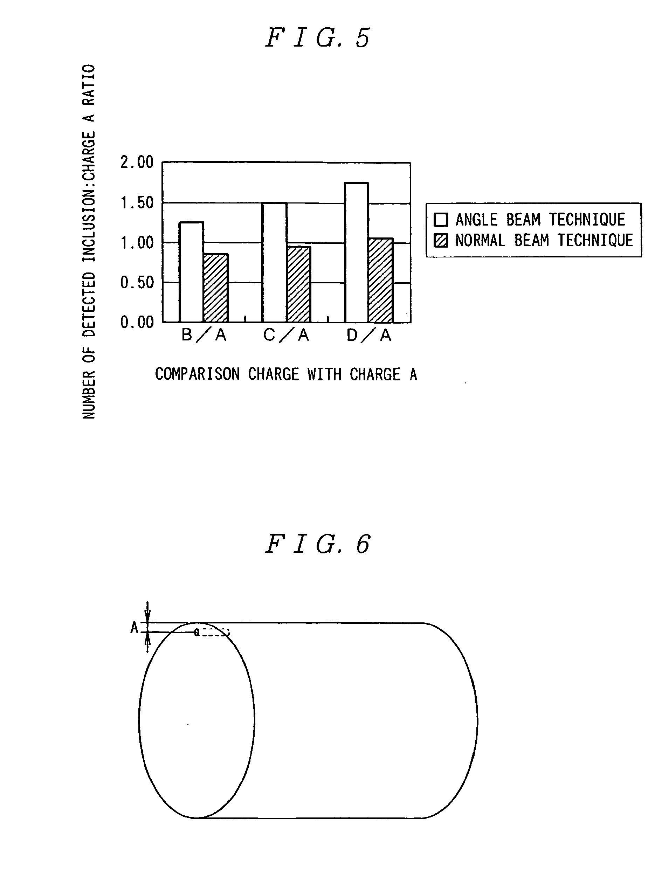

Fig. 5 shows the ratio for the number of detected inclusions when flaw detection was conducted for the volume for inspection of 2.0 × 10⁶ mm³ at a flaw detection frequency of 10 MHz both for the normal beam detection method and the angle beam technique. The number of detected inclusions was shown by the ratio between that of the charge A and that of other charges B to D. As apparent from the drawing, the number of detection is larger in the angle beam technique than in the normal beam technique and, in view of the above, the angle beam technique is preferred in view of ensuring cleanliness at higher reliability in the ultrasonic flaw detection method.

Then, the result of variously changing the flaw detection frequency in the ultrasonic detection method is to be considered.

Fig. 6 is a cross sectional view showing the state of forming an artificial defect to a round bar comprising a steel for use in bearing.

At first, as shown in Fig. 6, circular cylindrical holes (sized φ 0.5 × 15 mm) were formed each at a position intruding from the outer circumferential surface of the round bar 11 made of the steel for use in bearing as the object of the evaluation described above to the central axis O by a depth of A (2 mm, 5 mm, 10 mm or 15 mm) with the central axis O₁ of each hole being in parallel with the central axis O for the round bar 11 respectively to prepare a round bar with an artificial defect. Then, for the round bar with artificial defect, ultrasonic flaw detection was conducted by the angle beam technique (angle of incidence: 19°, water distance: 10 mm) by using the ultrasonic flaw detection inspection apparatus shown in Fig. 2 (USD15, manufactured by Krautkramer Japan Co., Ltd.) while utilizing a ceramic probe using a ceramic transducer (5 MHz, 10 MHz, 15 MHz, 20 MHz; transducer diameter: 6 mm, water-immersed focal distance 25 mm).

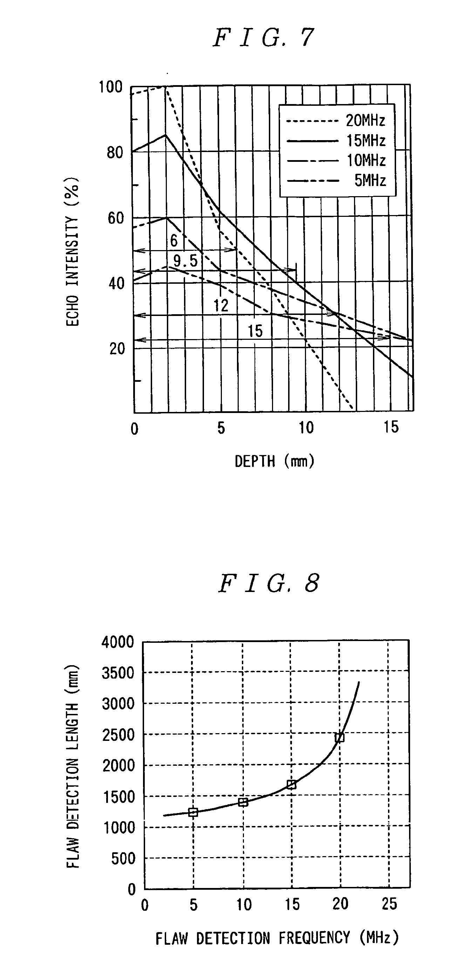

Fig. 7 is an explanatory view showing a relation between the flaw detection frequency and the flaw detection depth in each of them. For the flaw detection depth, a depth at which the echo intensity is one-half of the peak echo intensity is defined as an effective flaw detection depth.

As apparent from the drawing, the flaw detection depth decreases as the flaw detection frequency is higher. This means that when the flaw detection depth is smaller, the flaw detection volume is also smaller when scanning for an identical area. For example, when detecting the flaw for a round bar of 50 mmφ (diameter), as the flaw depth is smaller, the lengthy reach the necessary volume for flaw detection of 2.0 × 10⁶ mm³ in this embodiment is longer.

Fig. 8 shows a relation between the flaw detection frequency and the flaw detection length at which the volume for flaw detection reaches a necessary volume for flaw detection of 2.0 × 10⁶ mm³ when detecting the round bar of 50 mmφ (diameter) by the angle beam technique at each of the flaw detection frequencies.

As apparent from the drawing, the flaw detection length increases abruptly at a flaw detection frequency of 15 MHz or higher. In view of the above, the practical flaw detection frequency was determined as 15 MHz or lower in this embodiment.

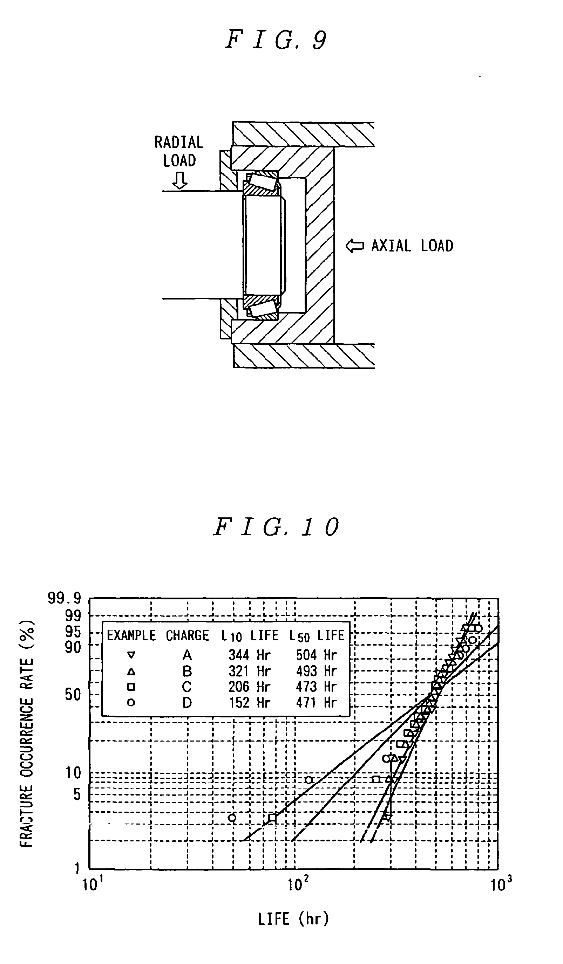

Then, tapered roller bearings shown in Fig. 1 were manufactured from the steel for use in bearing for each of the charges described above, and a life test was conducted for the tapered roller bearing by using the bearing life tester shown in Fig. 9. The test conditions are as shown below.
Bearing: tapered roller bearing HR32017XJ
Radial load: 53750N
Axial load: 22680N
Number of rotation of inner ring: 1500 min⁻¹
Lubrication: grease

Fig. 10 shows the result of the life test.

Bearings manufactured from the charge C and the charge D include those of short life. This can be seen from that the charge A and the charge B show long life, while the charge C and the charge D show shorter life at the portion of L₁₀ life or less (that is, short life). That is, the charges C and D include those of extremely shorter life compared with the charges A and B and show lack of life reliability as the steel for use in bearing. The flaked parts in the short life products occur at each of the inner ring and the outer ring using the evaluated material and it can be seen that short life products arise in a case where the large-sized inclusions are present irrespective of the part of the bearing parts.

Table 2 shows the result of conducting ultrasonic flaw detection by the angle beam technique under the conditions at a flaw detection frequency of 15 MHz or lower, for the volume for flaw detection of 2.0 × 10⁶ mm³ and at an incident angle of 19°. Further, Table 2 shows evaluation for the number of inclusions with a size of square root length of 0.15 mm or more and the number of inclusions with a size of a square root length of 0.2 mm or more.

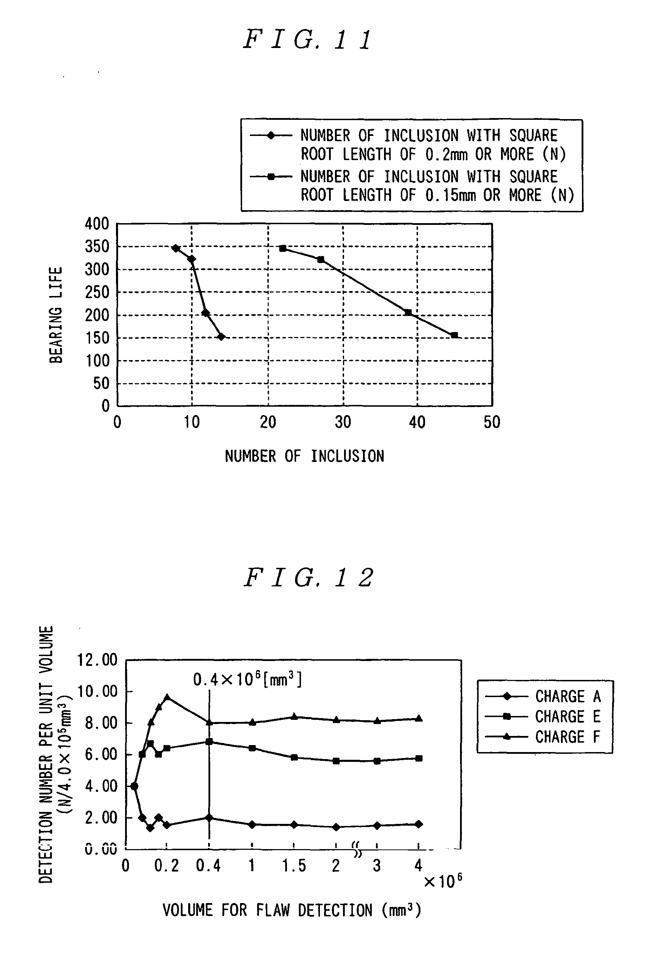

As apparent from the table, difference depending on the charges appears clearly in the number of inclusions. Fig. 11 shows a relation between the number of inclusions with a size of square root length of 0.15 mm or more and the number of inclusions with a size of square root length of 0.2 mm or more by the angle beam technique described above, and the bearing life (L₁₀ life).

A correlation that the life is shortened along with the increase in the number of inclusions is shown both for the inclusions with a size of the square root length of 0.15 mm or more and the inclusions with a size of square root length of 0.2 mm or more. Among them, since the life is gradually shortened along with the increase in the number of inclusions for the number of inclusions with the size of square root length of 0.15 mm or more, it is difficult to determine a threshold value for the number of inclusions. On the contrary, the life is shortened abruptly at the boundary for the number of detected inclusions of ten in the number of inclusions with a square root length of 0.2 mm or more. Further, detection for the number is complicated in the case of the inclusions with the square root length of 0.15 mm or more, since the number per volume for flaw detection of 2.0 × 10⁶ mm³ is excessively large. In view of the above, in this embodiment, the size of the inclusions for ensuring the life is defined as the inclusions with the size of square root length of 0.2 mm or more, and the number of the detected inclusions is defined as 10.0 or less per volume for flaw detection of 2.0 × 10⁶ mm³.

### < Second Embodiment >

Then, description is to be made to a second embodiment of the steel for use in bearing and the evaluation method for the large-sized inclusions thereof according to the invention.

It is to be described here to a case of effectively ensuring the cleanliness in a smaller volume for flaw detection in a case where it is expected that more large-sized inclusions are contained or they are contained more after inspection, compared with the first embodiment described above.

At first, as shown in Table 3, steels for use in bearings from different steel making methods were provided by three types of charges A, E, and F. Among them, the steel for use in bearing of the charge A is identical with that of the charge A in the first embodiment described above.

Table 3 also shows the result evaluated by the amount of oxygen and the extremal value statistic method together.

As apparent from the table, there is a difference in the amount of oxygen on every charge. Further, the difference is also present between the result of the extremal value statistic method shown by the square root length of the maximum inclusion area that can be present in 3 × 10⁴ mm² obtained by inspection within 10 mm × 10 mm × 30 view fields on every charge and estimating by the extremal value statistic method and that of the ultrasonic evaluation method (shown by the number of inclusions with square root length of 0.2 mm or more based on the evaluation per 4 × 10⁵ mm³ according to the method of the invention). This is because the maximum inclusion diameter estimated by the extremal value statistic method does not show the existence of actually present large-sized inclusions but based on the statistically estimated value.

Then, the steels for use in bearings for each of the charges described above were subjected to ultrasonic flaw detection by using the ultrasonic flaw detection inspection apparatus identical with that for the first embodiment. The angle beam technique was used for the ultrasonic flaw detection method and they were detected at a flaw detection frequency of 10 MHz and for the volume for flaw detection of 4.0 × 10⁶ mm³ to specify the number and the position of detected inclusions.

Fig. 12 shows a relation between the volume for flaw detection and the number of detected large-sized inclusions present per unit volume.

As apparent from the drawing, when the volume for flaw detection is as small as 2.0 × 10⁵ mm³, the number of inclusions with a square root length of 0.2 mm or more varies but the number of inclusions is settled as the volume for flaw detection increases, and it shows a settling trend in a region where the volume for flaw detection is 4.0 × 10⁵ mm³ or more in this embodiment, and also in the charges E and F of larger number of detection, the number of detection is settled in a region with the volume for flaw detection of 4.0 × 10⁵ mm³. In view of the above, a recommended volume for flaw detection in this embodiment is defined as 4.0 × 10⁵ mm³.

Then, tapered roller bearings as shown in Fig. 1 were manufactured from the steel for use in bearing for each of the charges described above, and a life test was conducted for the tapered roller bearings by using the bearing life tester shown in Fig. 8 in the same manner as in the first embodiment described above. The test conditions are identical with those in the first embodiment described above.

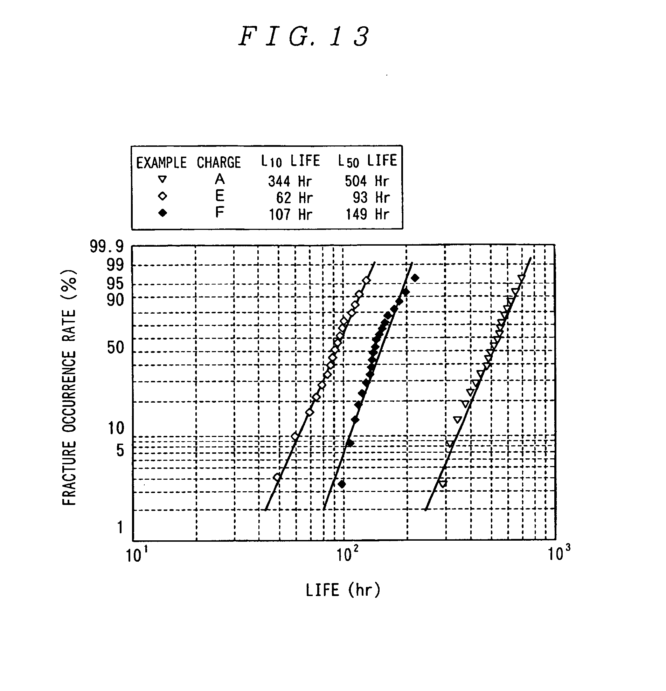

Fig. 13 shows the result of the life test.

As apparent from the drawing, the tapered roller bearings manufactured from the charge E and the charge F generally show short life.

Then, Table 3 shows the result of evaluation of ultrasonic flaw detection by the angle beam technique (incident angle 19°) at a flaw detection frequency of 15 MHz or lower. Table 3 shows the number of large-sized inclusions with a size of square root length of 0.2 mm or more when the ultrasonic flaw detection was conducted for the volume for flaw detection of 4.0 × 10⁵ mm³.

Referring to the result of the life test shown in Fig. 13, the number of inclusions with a size of square root length of 0.2 mm or more detected per 4.0 × 10⁵ mm³ of volume for flaw detection in the charge A of the long life is 2.0 or less. Then, in this embodiment, the size of the inclusions for life ensurance is defined as the inclusion with a size of square root length of 0.2 mm or more, and the number of detection thereof was defined as 2.0 or less per volume for flaw detection of 4.0 × 10⁵ mm³.

In the foregoings, the steel for use in bearing has been explained in the first embodiment and the second embodiment and, for the order of ensuring the cleanliness, it is at first judged as shown in the second embodiment that whether the inclusions with a square root length of 0.2 mm or more are present or not per 4.0 × 10⁵ mm³ of volume for flaw detection is 2.0 or less and the cleanliness of the charge of the object of ensurance is ensured by defining those not satisfying the same as failed and those satisfying the conditions as good. Then, it is preferred in view of the shortening of the inspection time to conduct time consuming but severer ensurance as shown in the first embodiment only for the steel for use in bearing to be ensured as satisfactory.

### < Third Embodiment >

Then, description is to be made to a third embodiment for the steel for use in bearing and the evaluation method for large-sized inclusions thereof according to the invention.

In this embodiment, ultrasonic wave flaw detection by the normal beam technique at a water distance of 15 mm was conducted for the round bar with artificial defect manufactured as shown in Fig. 6 described previously, by utilizing a polymer probe using a polymer transducer as an example of the invention (20 MHz, 30 MHz, 40 MHz, transducer diameter: 6 mm, water immersion focal distance: 25 mm) and a ceramic probe using an existent ceramic transducer (10 MHz, 15 MHz, and 20 MHz; transducer diameter: 6 mm, water immersion focal distance: 25 mm).

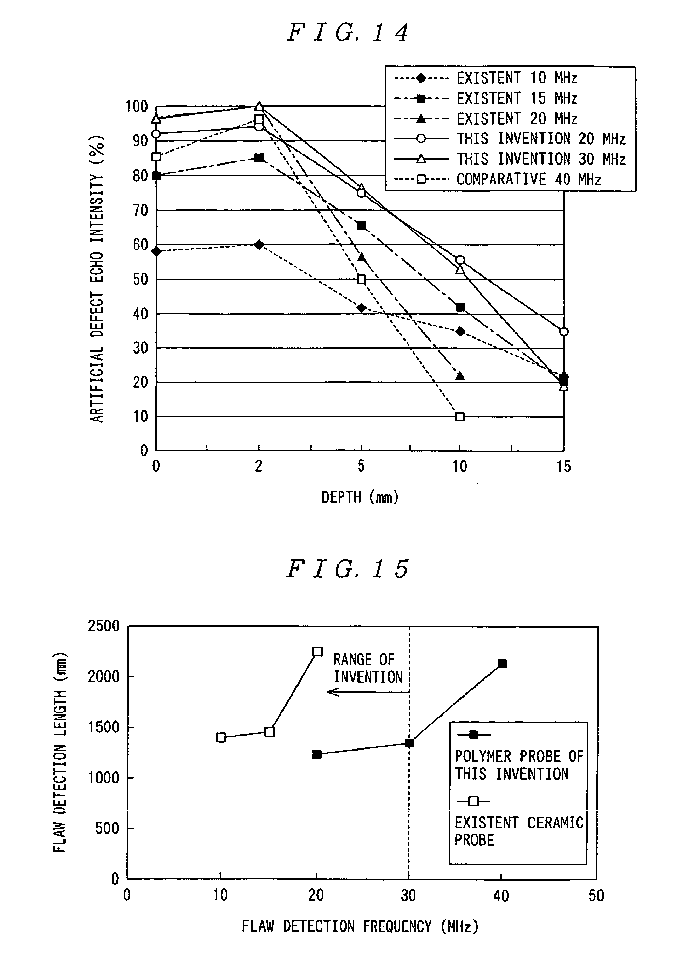

Fig. 14 shows a relation between the flaw detection depth and the artificial defect echo intensity at each of the flaw detection frequencies. The flaw detection depth at which the echo intensity decreased to one-half of the peak echo intensity was defined as an effective flaw detection depth. Further, since the reflection intensity for an identical defect is different at an identical amplifier intensity between the ceramic probe and the polymer probe in view of the characteristics, they were compared by adjusting such that it reached 100% at 20 MHz by the ceramic transducer and at 30 MHz by the polymer transducer for a defect at a position 2 mm below the surface in order to correspond (match) the detection performances for the identical defect.

As apparent from the drawing, when the polymer probe according to the invention and the existent ceramic probe are compared, it can be seen that since the sonic waves are less decayed for the polymer probe even when the frequency is higher, a polymer probe with the flaw detection frequency of 30 MHz has a deeper flaw detection depth than the ceramic probe with the flaw detection frequency of 15 MHz. Further, when comparing identical probes with each other, the flaw detection depth decreases as the frequency is higher. This means that as the flaw detection depth is smaller, the volume for flaw detection also becomes smaller upon scanning an identical area. For example, when a round bar of 50 mmφ is detected for example, more length is necessary to reach the required volume for flaw detection of 2.0 × 10⁶ mm³ shown in the first and the second embodiments described above as the flaw detection depth is shallower.

Fig. 15 shows a relation between the flaw detection frequency and the flaw detection length when the volume for flaw detection reaches the necessary volume for flaw detection of 2.0 × 10⁶ mm³ in a case of detecting a round bar of 50 φ by using the normal beam technique at respective flaw detection frequencies.

As apparent from the drawing, the flaw detection length increases abruptly at the flaw detection frequency exceeding 15 MHz in the existent ceramic probe. On the contrary, in the polymer probe according to the invention, the flaw detection range can be widened even when the flaw detection frequency is made higher and the flaw detection length increases abruptly when it exceeds 30 MHz and reaches 40 MHz. In view of the above, in a case of ultrasonic flaw detection by using the polymer probe, a practical flaw detection frequency was defined as 30 MHz.

Then, as shown in Table 4, steel for use in bearings from different steel making methods were provided by six types of charges I, II, III, IV, V and VI. Table 4 shows the result of evaluation by the amount of oxygen and the extremal value statistic method.

In the table, while the five types of charges I to V show a value of oxygen amount as low as 9 ppm or less, the charge VI shows a high value of 13 ppm. Further, the size of the inclusions evaluated by the extremal value statistic method described above is expressed by the square root length for the maximum inclusion area estimated to be present in 3 × 10⁶ mm², by using the extremal value statistic method, for the square root length of the maximum inclusion area obtained by inspecting within 10 mm × 10 mm × 30 view fields on every charge. Also for the value, like the result of the oxygen amount, while five types of the charges I to V show the maximum square root length as low as 32 µm or less, the charge VI shows a high value of 48 µm.

Then, each of the steels for use in bearing in each of the charges described above was evaluated by the ultrasonic flaw detection method using the ultrasonic flaw detection inspection apparatus used in the first embodiment. In the evaluation for the ultrasonic flaw detection in this embodiment, flaw detection was conducted by the normal beam technique using the focal type polymer probe at a flaw detection frequency of 20 MHz and for the volume for flaw detection of 1.5 × 10⁷ mm³.

Table 4 shows the number of inclusions with a square root length of 0.2 mm or more converted per volume for flaw detection of 2.0 × 10⁶ mm³ and the total length of inclusions with the length of 0.5 mm or more converted per volume for flaw detection of 1.0 × 10⁶ mm³ by detecting the volume for flaw detection of 1.5 × 10⁷ mm³ in each of the charges I to VI.

Then, tapered roller bearings as shown in Fig. 1 were manufactured in the same manner as in the first embodiment by using the steel for use in bearing of each of the charges described above and a life test was conducted in the same manner as in the first embodiment by using a bearing life tester as shown in Fig. 9. The test conditions are identical with those for the first embodiment.

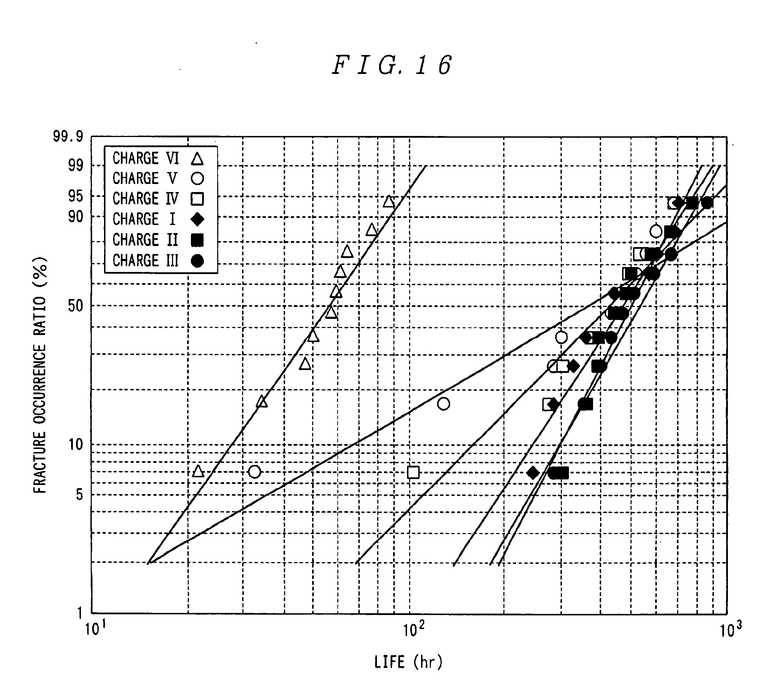

Fig. 16 shows a result of the life test.

Referring to the evaluation by the ultrasonic flaw detection shown in the drawing and Table 4, it is apparent that charge VI is poor in the evaluation by any of the oxygen amount, the extremal value statistic method and the ultrasonic flaw detection, and shows short life. Further, the charge IV and the charge V show short life irrespective of having the amount of oxygen and the extremal statistic value identical with those of the charges I to III. Further, when the ultrasonic flaw detection was conducted for the charge III and the charge IV, although the number of inclusions with a square root length of 0.2 mm or more present in the volume for flaw detection of 2.0 × 10⁶ mm³ is identical, the life is abruptly shortened in the charge IV. That is, the life is shortened abruptly at the boundary of the total length of 80 mm for the inclusions with a length of 0.5 mm or more present per volume for flaw detection of 1.0 × 10⁶ mm³ by the ultrasonic detection method. Then, in this embodiment, the total length of the inclusions with a length of 0.5 mm or more present per unit volume (1.0 × 10⁶ mm³) for ensuring the life is defined as 80 mm or less.

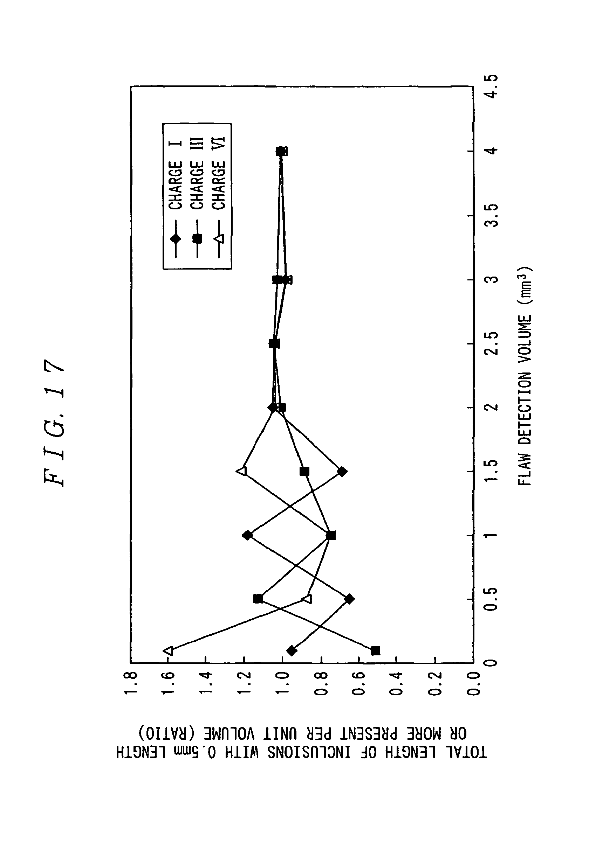

Fig. 17 shows a relation between each of the volumes for flaw detection and the total length of inclusions with a length of 0.5 mm or more present per unit volume. The total length of the inclusions was evaluated for the charge I, the charge III and the charge VI in the volume for flaw detection from 1.0 × 10⁵ to 4.0 × 10⁶ mm³, and is expressed by the value converting the total length of the inclusion in each of the flaw detection volumes per unit volume of 1.0 × 10⁶ mm³. Further, the result shown in the drawing is based on the result of evaluating each of the charges for flaw detection volume of 4.0 × 10⁶ mm³ being assumed as 1 and expresses how the total length of the inclusions varies in a case of decreasing the volume for flaw detection.

As apparent from the drawing, while the ratio of the total length of the inclusions varies when the volume for flaw detection is smaller, the ratio for the total length of the inclusions is settled as the volume for flaw detection increases and it is substantially constant in a region where the volume for flaw detection is 2.0 × 10⁶ mm³ or more. While the flaw detection time increases as the flaw detection volume increases, since reliability can be enhanced more by detecting the volume of 2.0 × 10⁶ mm³ or more, the necessary volume for flaw detection is defined as: 2.0 × 10⁶ mm³ in this embodiment. That is, since the necessary volume for flaw detection is identical with the result shown in the first embodiment described above, it is desirable to conduct flaw detection for the volume for flaw detection of 2.0 × 10⁶ mm³ or more in order to obtain stable values both for the number of inclusions and the total length of the inclusions with a length of 0.5 mm or more present per unit volume.

While the defects in the steel for use in bearing has been explained for the first to third embodiments by taking the non-metal inclusions as an example, ensurance for the defects to which the invention is applicable can be applied also to macro streak flaws, openings and cracks. Further, the square root length of the defects can be determined as below depending on shape of the defects.
1) In a case where the shape of the defect is linear (linear defect), the square root length is defined as a square root for the product of length L and width D (L × D)^{1/2}.
2) In a case where the shape of the defect is granular, spherical or lumpy (non-linear defect), a square root length is defined as the square root for the product of the maximum diameter (longer axis diameter) D1 and the minimum diameter (shorter axis diameter) D2 (D1 × D2)^{1/2}.

### < Fourth Embodiment >

Then, description is to be made to a fourth embodiment for the steel for use in bearing and the evaluation method for the large-sized inclusions thereof according to the invention.

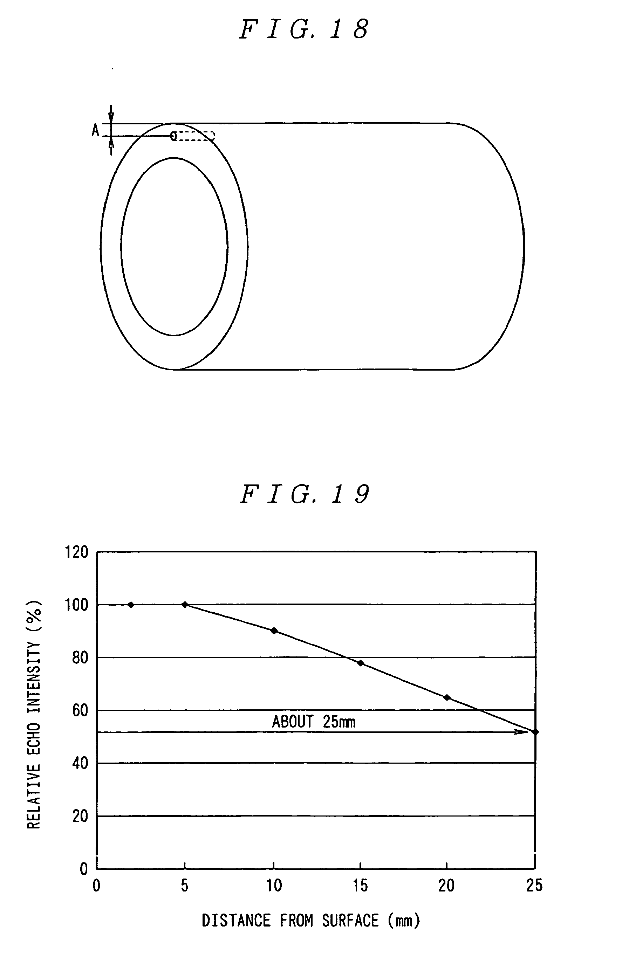

In this embodiment, as shown in Fig. 18, a seamless steel pipe having an outer diameter 180 mmφ × inner diameter 130 mmφ (25 mm thickness) was cut out to a length of 300 mm, and cylindrical columnar holes (sized 0.5 mmφ × 20 mmφ) were formed each at a position intruding from the outer circumferential surface to the central axis O by a depth A (2 mm, 5 mm, 10 mm, 15 mm, 20 mm, or 25 mm) of the seamless steel pipe such that the central axis O₁ is in parallel with the central axis O of the round bar 11 to prepare steel pipes with artificial defect.

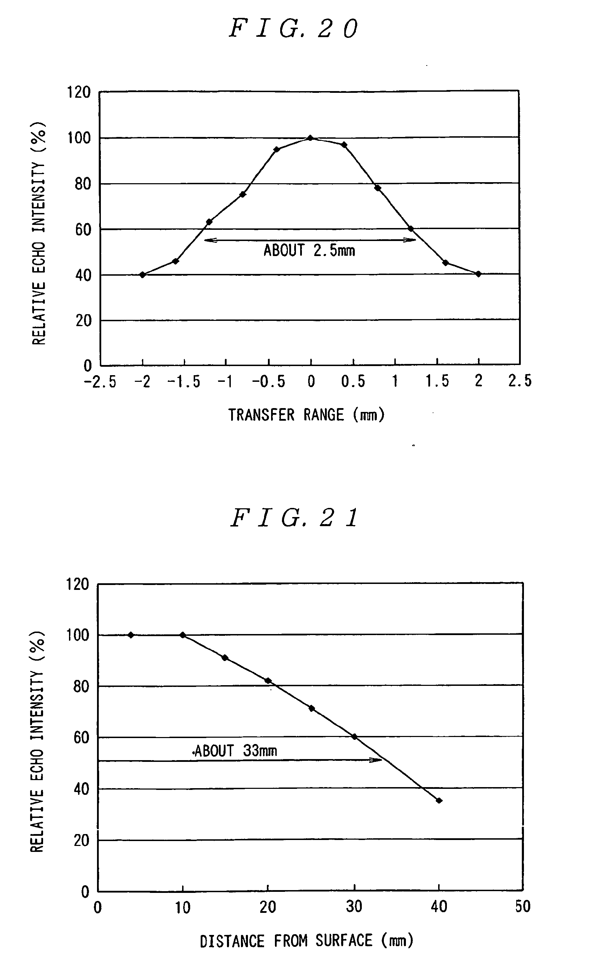

Then, ultrasonic flaw detection was conducted to the steel pipe with artificial defect by using the same ultrasonic flaw detection inspection apparatus as shown in the first embodiment (USD15, manufactured by Krautkramer Japan Co., Ltd.) and verification was conducted for deciding the detection limit. The ultrasonic flaw detection method in this embodiment was conducted by an angle beam technique at a water distance of 10 mm by using a focus type probe (transducer diameter: 6 mm, water immersion focal distance: 25 mm) under the conditions at an incident angle of 19° (refracting angle: 45°) at a flaw detection frequency of 15 MHz. Further, the amplifier sensitivity was set to 100% for the defect at a position 2 mm below the surface. Fig. 19 shows the result of flaw detection in the direction of the depth of the steel pipe with artificial defect by ultrasonic flaw detection and Fig. 20 shows the result of flaw detection in the circumferential direction for the artificial defect at a position for 2 mm depth by the ultrasonic flaw detection. Fig. 20 shows verification for the effective flaw detection pitch required for axial movement in a state of keeping the flaw detecting performance described above.

As apparent from Fig. 19, it was verified that the position 2 to 5 mm from the surface of the steel pipe with artificial defect showed 100% relative echo intensity, the depth at which the relative echo intensity decreased to one-half 50% relative to 100% described above was at a position of 25 mm depth, and flaw detection was possible for all cross sections of 25 mm thickness. Accordingly, it can be seen that the flaw detectable range in the direction of the depth under the conditions is from the surface to the 25 mm position in a case where it is defined as the position at which the echo intensity decreased to one-half (-6 dB).

As apparent from Fig. 20, the range in which the echo height was reduced to one-half (-6 dB) was about for 2.5 mm as the moving width, and also the width in which it decreased to 1/4 (-3 dB) was about 4 mm.

Fig. 20 shows the result of flaw detection in a steel pipe with artificial defect by controlling the position such that the echo height for the artificial defect is highest at a position intruding from the surface by the depth: A = 5 mm, then controlling the sensitivity for the echo height to the 100% echo height and conducting flaw detection while taking a pitch finely ahead and behind the position as the center in the circumferential direction. Fig. 20 shows a relative echo intensity relative to each moving distance (rotational distance) to the peak value (100%) when the artificial defect is detected at a position intruding from the surface of the steel pipe with artificial defect to a depth: A = 5 mm by using the same ultrasonic flaw detection inspection apparatus as in the first embodiment. That is, it shows the state in which the relative echo intensity gradually increases toward the point (0 point) at which the probe arrives at a peak value and then decreases after passing through the point O. The relative echo intensity is in proportion with the length of the defect. Accordingly, only the 0 point (peak value) is noted in the moving range and a peak hold treatment is applied by the personal computer 20 shown in Fig. 2, so that the peak value is always stored. This is because the defect with a length of 1.0 mm or 1.1 mm of the present invention can not be determined exactly since the relative echo intensity does not settle unless the moving range is specified.

Further, Fig. 19 shows the peak value determined as described above on the ordinate as the relative echo intensity (as 100% from 2 to 5 mm), by means of a ratio for the artificial defect echo intensity for 0.5 φmm × 20 mm relative to the depth from the surface. It can be seen that the relative echo density decreases as the distance from the surface is deeper.

As described above, it results in a disadvantage that the relative echo intensity is different even for the defects of identical length depending on the depth (decayed as the distance is deeper).

Accordingly, it is at first adapted that the depth for the defect of 0.5 mmφ × 20 mm from the surface (aside from the echo intensity) can be determined accurately by the personal computer 20 based on the relation between the time from reflection of the oscillated ultrasonic waves on the defect to detection by the probe again, and the oscillation frequency.

Then, for the relative echo intensity decayed depending on the depth, a relation as shown in Fig. 19 is previously determined by using the artificial defect.

In the actual measurement, the relation in Fig. 19 is stored in the personal computer 20 as a correction coefficient (for example, as the correction coefficient for the defect echo relative to the depth obtained as a reciprocal) to the echo intensity at each deep position and calculated.

When the defect echo values (peak values) to the depth from the surface of the seamless steel pipe are taken successively into the memory of the personal computer 20 and calculated, the length of defects in all cross sections (including as far as the desired depth) can be detected.

That is, in this embodiment, length of the defects for all cross sections can be detected in the stage of the raw material for the seamless steel pipe with a diameter of 180 mmφ or less and the thickness of 25 mm or less, and all cross sections of the raw material suitable to the bearing on the side of users which could not be inspected so far in the steel manufacturers can be inspected for total. Then, in this embodiment, it has been found that long life can be attained when defects of a length of 1 mm or more are not present in all cross sections.

From the foregoing result, it has been found that when the flaw detection is conducted under the conditions described above in this embodiment, it provides a flaw detection performance for about 25 mm from the surface in the direction of the depth and about 2.5 mm of effective flaw detection pitch (beam diameter).

Accordingly, for evaluating the seamless steel pipe material with a diameter of 180 mm or less and a wall thickness of 25 mm or less for all cross sections in this embodiment flaw detection for all cross sections is possible since the flaw detection depth is about 25 mm.

Further, in the example for the restricted range of the invention, regarding the flaw detection speed, it has been found that flaw can be detected at a speed of about 7 m/min for the diameter of 180 mmφ, by defining the flaw detection pitch to about 2.5 mm and, further, in view of the transmission/reception speed of ultrasonic waves by a commercially available flaw detection equipment.

This is slow when compared with a level of the commercial inspection speed exceeding 100 m/min practiced so far in the steel manufacturers and this is a speed that can not be practiced by the steel manufacturers with a view point of productivity. However, since the manufacturing speed, for example, by hot forging is about 10 m/min at the highest, for example, in the bearing manufacturing step, this is within a range capable of sufficiently conducting one hundred percent flaw detection.

Accordingly, in this embodiment, when a seamless steel pipe having a diameter of 180 mmφ and wall thickness of 25 mm or less is used as the raw material in the manufacture of bearings, it can be seen that evaluation by ultrasonic flaw detection is possible as the one hundred percent inspection for all cross sections without lowering the productivity. Then, improvement for the life of the rolling bearing manufactured by using as the material the high quality seamless steel pipe selected by the method shown in the fourth embodiment was verified.

In a case of general steel material for use in bearing, since the cleanliness is satisfactory and the probability that the large-sized inclusions are present on the bearing raceway surface is decreased, a seamless steel pipe of poor cleanliness was previously provided in order to make the effect of the invention clearer. Then, absence or presence of defects was checked for the seamless steel pipe of poor cleanliness by fine ultrasonic flaw detection shown in the fourth embodiment, and the effect was verified by conducting the life test for the rolling bearings manufactured by using the steel pipe.

At first, ultrasonic flaw detection was conducted under the following flaw detection conditions using a seamless steel pipe (102 mmφ outer diameter and 6 mm wall thickness) for outer rings and a seamless steel pipe (57 mmφ outer diameter, 7 mm wall thickness) for inner rings as the raw material. Then, the materials were selected by conducting the ultrasonic flaw detection, and 6309 deep grooved roll bearings were manufactured by using the seamless steel pipes ensured for high cleanliness and seamless steel pipes of poor cleanliness without applying ultrasonic flaw detection as the raw material, respectively, by way of lathing, heat treatment and grinding.

Further, as a comparison, seamless steel pipes of usual materials (material of good cleanliness) were used and the materials were selected by conducting the ultrasonic flaw detection to manufacture 6309 deep grooved ball bearings. The flaw detection was conducted to the raw materials under the same conditions as those in the fourth embodiment described previously.

The result of evaluation of the ultrasonic flaw detection for two types of materials of different cleanliness described above is represented by dividing the number of inclusions with a length of 1 mm or more detected in the volume for effective flaw detection range with the evaluation volume (weight).

Further, for the evaluation of the length of defects (inclusions) in the evaluation by ultrasonic flaw detection, a correlation was taken between the length of the defects by the ultrasonic flaw detection inspection apparatus shown in Fig. 2 in the case where the defects were detected previously and the length of actual inclusions found by the cross sectional investigation for the defects and a calibration line was determined and the following evaluation was conducted.

Then, a life test was conducted for rolling bearings manufactured through each of the evaluations. The conditions for the life test are as shown below.

The life test conditions are as follows.
Tested bearing: 6309 deep grooved ball bearing
Test load: Radial load of 21200N
Number of rotation: 3900 min⁻¹
Lubricant: Mineral oil corresponding to VG68

Since the calculated life under the test conditions described above was 67 hours, the test was terminated at 200 hours, that is, three times thereof and presence or absence of flaking was evaluated at the instance.

Table 5 shows the result of evaluation.

No. 2 and No. 4 in Table 5 are test bearings in the example of the invention manufactured with seamless steel pipes with no defects of a 1 mm length or more in all cross sections (ball: hardened and tempered product according to SUJ2) and it can be seen that any of them clears the test for 200 hours.

According to Table 5, in the test bearings using the material of poor cleanliness (No. 1, No. 2), the existence ratio of the inclusions with a length of 1 mm or more for all cross sections is increased compared with the test bearings (No. 3, No. 4) using usual materials, However, in the test bearing (No. 2) comprising a selected material not detected for the inclusions with a length of 1 mm or more, flaking did not occur even when it exceeded 200 hours and stable long life was obtained. On the contrary, in the test bearing (No. 1) comprising a material not selected by the ultrasonic flaw detection, flaking occurred at a high ratio by the number of 4 out of 10 during 200 hours till the test was terminated. Further, also in the test bearing (No. 3) using the usual material, flaking occurred in one out of ten, although occurrence frequency was lower, and it can be seen that this is poor relative to selected products by the ultrasonic flaw detection in obtaining stable long life.

Further, in the test bearing (No. 5) using the material selected depending on the absence or presence of inclusions with a length of 1.2 mm or more, although the flaw detection was conducted and the inclusions were removed, flaking occurred, although the probability were low, by the number of one out of 10 bearings, in the same manner as in No. 3. Accordingly, it is important in order to obtain long life stably that inclusions of a length of 1 mm or more are not present.

### < Fifth Embodiment >

Then, description is to be made to a fifth embodiment for the steel for use in bearing and the evaluation method for the large-sized inclusions thereof according to the invention.

In this embodiment, like in Fig. 6 described above, a material for use in bearing of 60 mmφ was cut out to a length of 300 mm, and cylindrical columnar holes (sized 1.0 mmφ × 20 mm) were formed each at a position intruding from the outer circumferential surface to the central axis O by a depth A (5 mm, 10 mm, 15 mm, 20 mm, 25 mm, or 30 mm) of the round bar steel material such that the central axis O₁ is in parallel with the central axis O of the round bar 11 to prepare a steel pipe with artificial defect.

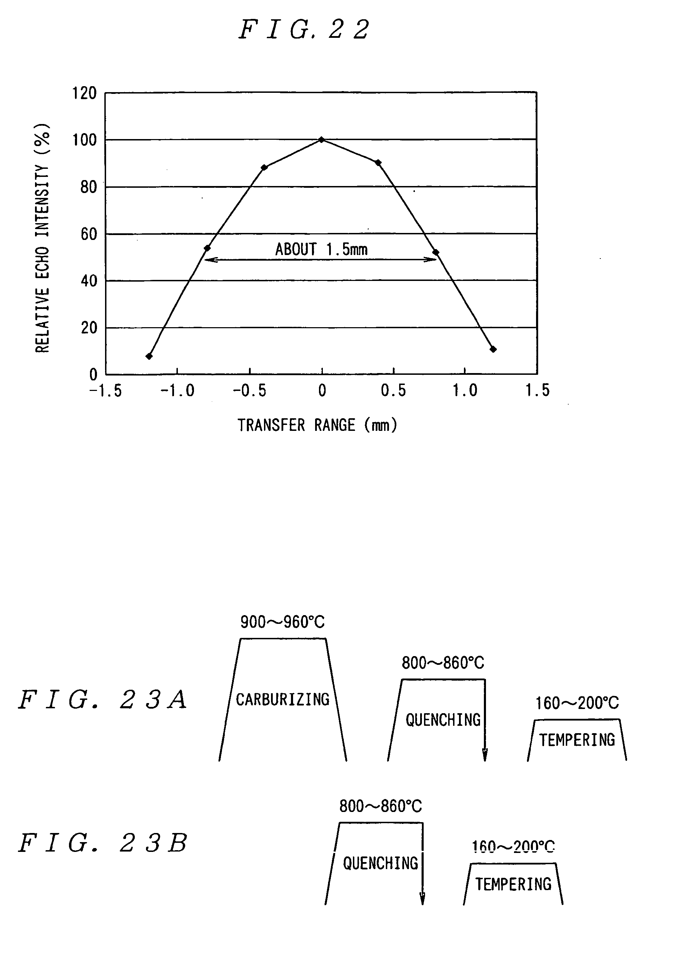

Then, ultrasonic flaw detection was conducted to the round bar with artificial defect by using the same ultrasonic flaw detection inspection apparatus as in the first embodiment (USD15, manufactured by Krautkramer Japan Co., Ltd.) and verification was conducted for deciding the detection limit. The ultrasonic flaw detection method in this embodiment was conducted by a normal beam technique at a water distance of 10 mm by using a focus type probe (transducer diameter: 6 mm, water immersions focal distance: 50 mm) under the conditions at an incident angle of 0° and at a flaw detection frequency of 15 MHz. Fig. 21 shows the result of flaw detection in the circumferential direction of the depth of the round bar with artificial defect by ultrasonic flaw detection and Fig. 22 shows the result of flaw detection in the circumferential direction for the round bar with artificial. Fig. 22 shows verification for the effective flaw detection pitch required for axial movement in a state of keeping the flaw detecting performance described above.

As apparent from Fig. 21, it was shown that the position intruding by a depth A = 10 mm from the surface of the round bar with artificial defect showed 100% relative echo intensity, and the depth A at which the relative echo intensity decreased to one-half 50% relative to 100% described above was at a position of 25 mm depth, under the conditions of this embodiment. Accordingly, it can be seen that the flaw detectable range in the direction of the depth under the conditions is from the surface to a depth A = 33 mm position in a case where it is defined as the position at which the echo intensity is decreased to one-half (-6 dB).

As apparent from Fig. 22, the range in which the echo height reduced to one-half (-6 dB) was for about 1,6 mm as the moving width, and also the width in which it reduced to 1/4 (-3 dB) was for about 1 mm.

Fig. 22 shows the result of flaw detection in the round bar with artificial defect by controlling the position such that the echo height for the artificial defect was highest at a position intruding from the surface by the depth A = 10 mm, then controlling the sensitivity for the echo height to the 100% echo height and conducting flaw detection while taking a pitch finely ahead and behind the position as the center in the circumferential direction.

However, since the method adopts the normal beam technique, a region not capable of flaw detection (insensitive zone) is formed from the surface about to the depth A = 2 to 3 mm of the round bar with artificial defect. However, since the region of the depth described above is to be scraped off by lathing or the like before the completion of the bearing or corresponds, if it remains, at the outer diametrical surface of the bearing, this is a range not giving an effect on the life.

Then also in this embodiment, when the defect echo values (peak values) to the depth A from the surface of the round bar material are taken successively into the memory of the personal computer 20 shown in Fig. 2 and calculated like in the fourth embodiment described above, the length of defects in all cross sections (including as far as the desired depth) can be detected.

That is, in this embodiment, length of the defects for all cross sections can be detected in the stage of the raw material for the round bar with a diameter of 60 mmφ or less, and all cross sections of the raw material suitable to the bearing on the side of users which could not be inspected so far in the steel manufacturers can be inspected in total. Then, in this embodiment, it has been found that long life can be attained when defects of a length of 1 mm or more are not present in all cross sections.

From the foregoing result, it has been found that when the flaw detection is conducted under the conditions described above in this embodiment, it provides a flaw detection performance for about 30 mm from the surface in the direction of the depth and about 1.5 mm of effective flaw detection pitch (beam diameter).

Accordingly, it can be seen for evaluating all cross sections in the round bar material in this embodiment, since the flaw detection depth is about 30 mm, the range for diameter of the raw material is restricted to 60 mmφ.

Further, in the example for the restricted range of the invention, regarding the flaw detection speed, it has been found that flaw can be detected at a speed of about 10 m/min in a case of the round bar material with a diameter of 60 mmφ, by defining the flaw detection pitch to about 1.5 mm and, further, in view of the transmission/reception speed of ultrasonic waves by a commercially available flaw detection equipment (measuring length per unit time tends to increase as the diameter is reduced, and 60 mmφ provides the slowest condition within the defined range).

This is slow when compared with a level of the commercial inspection speed exceeding 100 m/min practiced so far in the steel manufacturers and this is a speed that can not be practiced by the steel manufacturers with a view point of productivity. However, since the manufacturing speed, for example, in the bearing manufacturing step by hot forging is about 10 m/min at the highest, this is within a range capable of sufficiently conducting one hundred percent flaw detection.

Accordingly, in this embodiment, it can be seen that evaluation by ultrasonic flaw detection is possible as one hundred percent inspection for all cross sections without lowering the productivity, when a round bar material with a diameter of 60 mmφ or less is used in the manufacture of bearings.

Then, extension for the life of the rolling bearing manufactured by using the high quality round bar as the material selected by the method shown in the fifth embodiment was verified.

In a case of general steel material for use in bearing, since the cleanliness is satisfactory and the probability that the large-sized inclusions are present on the bearing raceway surface is decreased, a round bar of poor cleanliness was previously provided in order to make the effect of the invention clearer. Then, absence or presence of defects was checked for the round bar material of poor cleanliness by fine ultrasonic flaw detection shown in the fifth embodiment, and the effect was verified by conducting the life test for the rolling bearings manufactured by using the steel pipe.

At first, ultrasonic flow detection was conducted under the following flaw detection conditions using a round bar of 35 mmφ as the raw material. Then, 6206 deep grooved roll bearings were manufactured using the round bar ensured for high cleanliness selected by conducting the ultrasonic flaw detection, and selecting the material, and using the round bar of poor cleanliness without applying ultrasonic flaw detection as the raw material, respectively, by way of lathing, heat treatment and grinding.

Further, as a comparison, rounds bar of usual materials (material of good cleanliness) were used and the materials were selected by conducting the ultrasonic flaw detection to manufacture 6206 deep grooved ball bearings. The flaw detection to the raw materials were conducted under the same conditions as those in the fifth embodiment described previously.

The result of evaluation of the ultrasonic flaw detection for two types of materials of different cleanliness described above was represented by dividing the number of inclusions with a length of 1 mm or more detected in the volume for effective flaw detection range with the evaluation volume (weight).

Further, for the evaluation of the length of defects (inclusions) in the evaluation by ultrasonic flaw detection, a correlation was taken between the length of the defects by the ultrasonic flaw detection inspection apparatus shown in Fig. 2 in the case where the defects were detected previously and the length of actual inclusions found by the cross sectional investigation for the defects, and a working curve was determined and the following evaluation was conducted.

Then, a life test was conducted for rolling bearings manufactured through each of the evaluations. The conditions for the life test are shown below.

The life test conditions are as follows.
Tested bearing: 6206 deep grooved ball bearing
Test load: Radial load of 7800N
Number of rotation: 3900 min⁻¹
Lubricant: Mineral oil corresponding to VG68

Since the calculated life under the test conditions described above was 67 hours, the test was terminated at 200 hours, that is, three times thereof and presence or absence of flaking was evaluated at the instance.

Table 6 shows the result of evaluation.

No. 2 and No. 4 in Table 6 are test bearings in the examples of the invention manufactured with round bars with no defects of a 1 mm length or more in all cross sections (ball: hardened and tempered product according to SUJ2) and it can be seen that any of them clears the test for 200 hours.

According to Table 6, in the tested bearings using the material of poor cleanliness (No. 1, No. 2), the existence ratio of the inclusions with a length of 1 mm or more for all cross sections increased compared with the test bearings (No. 3, No. 4) using usual materials, However, in the test bearing (No. 2) comprising a selected material not detected for the inclusions with a length of 1 mm or more, flaking did not occur even when it exceeded 200 hours and stable long life was obtained. On the contrary, in the test bearing (No. 1) comprising the material not selected by the ultrasonic flaw detection, flaking occurred at a high ratio by the number of 6 out of 10 during 200 hours till the test was terminated. Further, also in the test bearing (No. 3) using the usual material, flaking occurred by the number of one out of ten, although occurrence frequency was lower, and it can be seen that this is poor compared with selected products by the ultrasonic flaw detection in that the stable long life can be obtained stably.

Further, in the test bearing (No. 5) using the material selected depending on the absence or presence of inclusions with a length of 1.2 mm or more, although the flaw detection was conducted and the inclusions were removed, flaking occurred, although the frequency was low, by the number of one out of 10, in the same manner as in No. 3. Accordingly, it is important in order to obtain long life stably that inclusions of a length of 1 mm or more are not present.

### < Sixth Embodiment >

Then, description is to be made to a sixth embodiment for the steel for use in bearing and the evaluation method for the large-sized inclusions thereof according to the invention.

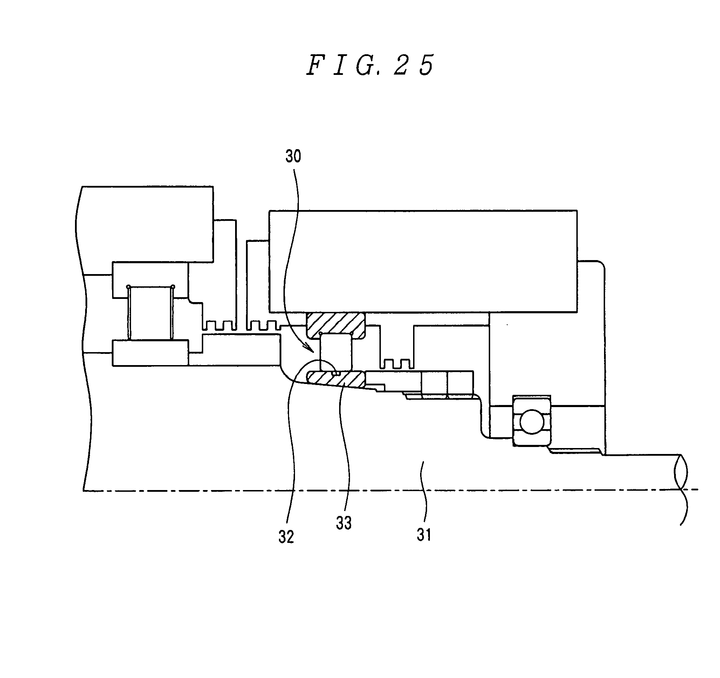

In this embodiment, steel species shown in Table 7 were formed each into a shape of an inner ring of a bearing and, after applying a heat treatment of carburizing, quenching and tempering to the carburized steel and applying a heat treatment of quenching and tempering and then finish grinding to the through-hardened steel according to the heat treatment shown in Figs. 23A and 23B to manufacture inner rings 33 having a tapered inner diameter (refer to Fig. 25). The inner ring 33 is applied with the heat treatment shown in Figs. 23A and 23B to the product after lathing but not applied with grinding. Further, it was finished to the surface roughness of 3.0 µm Ra.

The inner rings of Examples 2, 3, and 5 of the invention and the inner rings of Comparative Examples 1 and 3 in Table 7, that is, carburized steel (SCR, SCM, SAE) were carburized at 900 to 960°C for 10 hours, then hardened at 800 to 860°C for one hour and, subsequently, tempered at 160 to 200°C, thereby applying the heat treatment as shown in Fig. 23A. Further, the inner rings of Examples of 1, 4, and 6 of the invention and the inner ring of Comparative Example 2 in Table 7, that is, through-hardened steel (SUJ) were applied with hardening at 800 to 860°C for one hour and, subsequently, tempering at 160 to 200°C, thereby applying the heat treatment as shown in Fig. 23B.

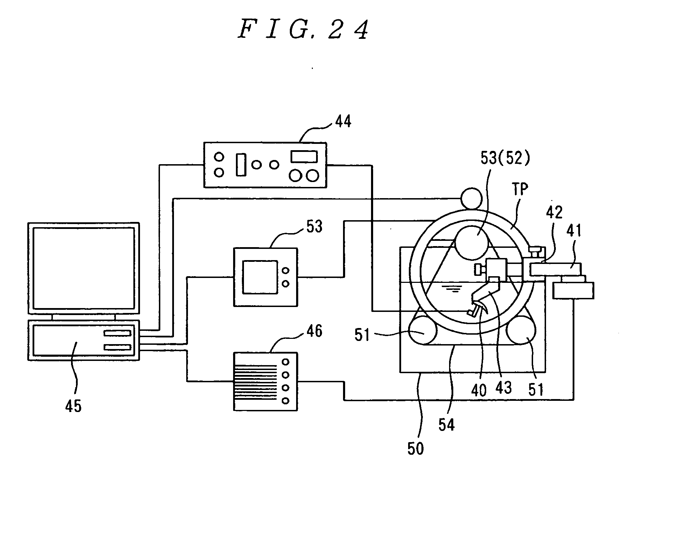

Then, the inner rings of Examples 1 to 6 of the invention and of Comparative Examples 1 to 3 were at first detected for the maximum length of non-metal inclusions for all cross sections by the ultrasonic flaw detection inspection apparatus shown in Fig. 24.

In the ultrasonic flaw detection inspection apparatus, as shown in Fig. 24, a test piece TP comprising a ring-shaped steel material for use in bearing (corresponding to outer ring) is placed on two pulleys 51 spaced apart each other in the horizontal direction in a water tank 50, and a belt 54 is wound around in a normal triangular shape over each of the pulleys 51 and a pulley 53 fixed to the motor shaft for a rotary driving motor 52.

The rotary driving motor 52 is controlled by a control device 45 by way of a motor driving control amplifier 53 and the test piece TP placed on each of the pulleys 51 is rotated at a predetermined speed by the driving of the rotary driving motor 52. The control device 45 comprises a personal computer and the like having a display means such as a CRT. Further, a probe 40 is attached by way of a probe attaching member 43 to an XY stage 42 of a linear guide 41 located moveably along the axial direction of the test piece TP, and this is opposed to the inner circumferential surface of the test piece TP in the attached state. The probe 40 transmits ultrasonic pulses according to voltage signals from the ultrasonic flaw detector 44 to the inner circumferential surface of the test piece TP and receives the reflection echo thereof, converts the same into voltage signals and transmits them to the ultrasonic flaw detector 44.

The ultrasonic flaw detector 44 transmits an instruction signal comprising a voltage signal to the probe 40 based on the instruction from the control device 45, and transmits the obtained flaw detection information to the control device 45 based on the transmitted signal and the received signal, and the control device 45 displays the signal on the CRT.

The linear guide device 41 is adapted to move the probe 40 in the axial direction of the test piece TP by way of a not illustrated servo motor controlled by a controller 46 for use in the linear guide.

When one rotation (360°) of the test piece is detected by a rotary encoder located to the outer circumferential surface of the test piece TP, the linear guide controller 46 controls the servo motor based on the instruction from the control device 45 to move the probe 40 by a predetermined distance in the axial direction of the test piece TP. Thus, flaw detection is conducted for all cross sections below the entire raceway surface of the test piece TP. While a steel material for use in bearing corresponding to the outer ring is illustrated as the test piece TP in Fig. 24, it is also applicable to a test piece comprising a steel material for use in bearing corresponding to the inner ring when the probe 40 and pulley 51 are constituted such that their positions are reversed.

Further, the ultrasonic flaw detection in this embodiment was conducted under the conditions at a flaw detection frequency of 15 MHz by using a focus type probe (transducer diameter: 6 mm, water immersion focal distance: 25 mm) . Further, in the ultrasonic flaw detection method in this embodiment, it was located such that the angle of incidence of the entered ultrasonic waves was 25° up to about 2 mm from the surface of the raceway surface of the inner ring and the water distance was 25 mm. Further, for the deeper region, it was located such that the angle of incidence of ultrasonic waves entering the inner ring was at 5°, the water distance was set to 15 mm, and defects at arbitrary depth were detected by using the constitutions in combination.

Then, for the maximum length of the non-metal inclusions, inspection was previously conducted for a number of respective bearings (steel species), run-in grinding was applied from the raceway surface for the detected defects based on the information for the strength, the length and the width of the detected defect echo, and a relation between the intensity of the ultrasonic echo and the size of the defect was determined to select each of the bearing inner rings shown in Table 7.

Then, the manufactured inner rings 33 of Examples 1 to 6 of the invention and Comparative Examples 1 to 3 were press fitted into a tapered shaft 31 of an inner ring crack life tester shown in Fig. 25 thereby giving a fitting stress (200 MPa) to the inner ring 33, and the tapered shaft 31 was rotated under the condition at a radial load of 38000N and at a number of rotation of 1800 min⁻¹. Thus, the rolling stress was exerted on the raceway surface of the inner ring 33 and a crack life test of examining the number of total rotation till the inner ring 33 cracked in the axial direction was conducted.

Table 7 shows the result of the crack life test.

As apparent from Table 7, it can be seen that the maximum length of the non-metal inclusions is 0.6 mm or less and the crack life is long in the inner rings of Examples 1 to 6 of the invention. On the contrary, it can be seen that in Comparative Examples 1 to 3 in which the maximum length of the non-metal inclusions exceeds 0.6 mm, the crack life is greatly reduced compared with the examples of the invention.

Accordingly, cracks in the bearing ring can be prevented by restricting the maximum length of the defects (including aggregates of non-metal inclusions) to 0.6 mm or less in the volume for inspection for all cross sections from below the rolling bearing raceway surface.

### < Seventh Embodiment >

Then, description is to be made to a seventh embodiment for the steel for use in bearing and the evaluation method for the large-sized inclusions thereof according to the invention.

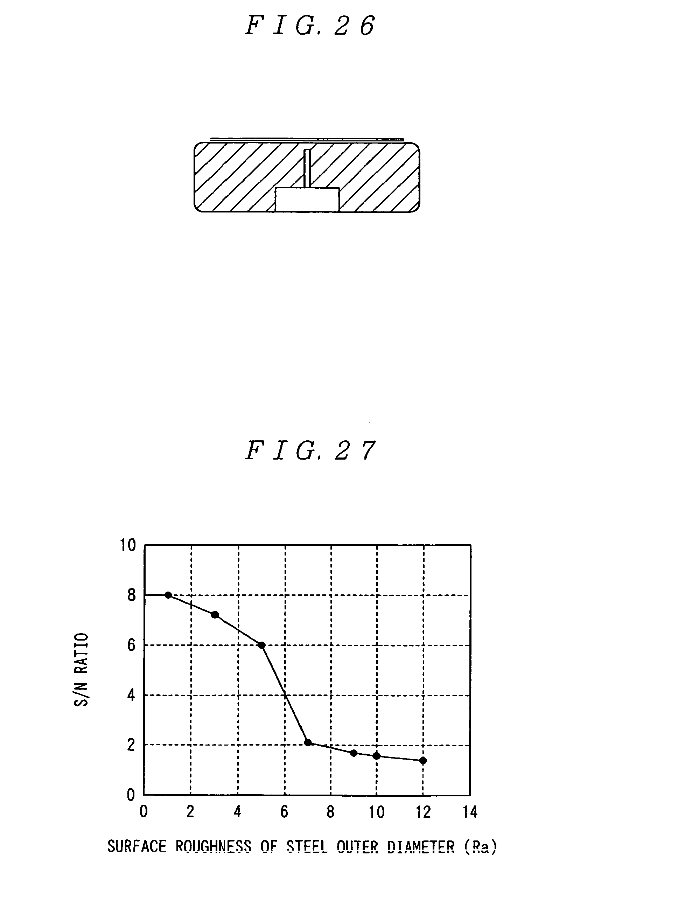

In this embodiment, upper surfaces of the test specimens (outer diametrical surface) comprising steel materials for use in bearing shown in Fig. 26 were machined by lathing to manufacture those having various surface roughness of 1 to 12 µm Ra (refer to Fig. 27), and holes (artificial defects) each of 0.5 mmφ were fabricated from the bottom of the test specimen in the vertical direction to the position 2 mm below the surface. Then, the echo intensity to noise ratio was determined for artificial defect for the test specimens of various surface roughness to investigate the adequacy of the defect detection.

For the detection of the artificial defect in the test specimen, ultrasonic flaw detection was conducted by using the ultrasonic flaw detection inspection apparatus shown in Fig. 24 under the conditions at a flaw detection frequency of 15 MHz by using a focus type probe (transducer diameter: 6 mm, water immersion focal distance: 25 mm). In the ultrasonic flaw detection in this embodiment, it was located such that the angle of incident of ultrasonic waves entering the test specimen was 25° and the water distance was set to 15 mm.

Fig. 27 shows a relation between the S/N ratio and the surface roughness of the outer diametrical surface of the test specimen.

As apparent from the drawing, while good detection intensity (S/N ratio) is shown up to 5 µm Ra of the surface roughness of the outer diametrical surface of the test specimen, the echo intensity was lowered extremely when the roughness exceeds 5 µm Ra, and detection for a defect with a length of less than 0.6 mm became difficult. Accordingly, the surface roughness of the steel material for use in bearing was restricted to 5 µm Ra or less.

According to this example of the invention, a defect of a maximum length of 0.6 mm or more can be detected at a good accuracy for all cross sections of the material for use in bearing irrespective of the cleanliness control by the existent sample evaluation for steel materials by restricting the surface roughness at the outer diametrical surface of the steel material to 5 µm Ra or less, in the volume for inspection for all cross sections below the outer diametrical surface of the steel material for use in bearing.

Accordingly, although the detection accuracy is somewhat lowered, defects can be found simply and conveniently also on the lathed surface before grinding and it can be checked as failure before preparation to completed products, so that the cost can be decreased compared with the usual case of conducting selection in the stage of completed products.

Further, there is no worry of cracking even under severe conditions in the market and occurrence of short life bearing products can be eliminated and bearings can be ensured in one hundred percent inspection not by sample investigation.

**< Table 1 >**

| Charge | Steel species | Evaluation method | |
|---|---|---|---|
| | | Oxygen amount | Extremal statistics value |
| | | O{ppm} | {µm} |
| A | SUJ2 | 9 | 25 |
| B | | 8 | 22 |
| C | | 8 | 24 |
| D | | 9 | 27 |

**< Table 2 >**

| Charge | Steel species | Ultrasonic evaluation method | |
|---|---|---|---|
| | | Number of inclusive with square root length of 0.2 mm or more (N) | Number of inclusive with square root length of 0.15 mm or more (N) |
| A | SUJ2 | 8 | 22 |
| B | | 10 | 27 |
| C | | 12 | 39 |
| D | | 14 | 45 |

**< Table 3 >**

| Charge | steel species | Evaluation method | | |
|---|---|---|---|---|
| | | Oxygen amount | Extremal statistics value | Ultrasonic evaluation method |
| | | O{ppm} | {µm} | {N/(4.0 × 10⁵ mm³)} |
| A | SUJ2 | 9 | 25 | 2.0 |
| E | | 12 | 31 | 6.0 |
| F | | 14 | 35 | 9.0 |

**< Table 4 >**

| Charge | Steel species | Evaluation method | | | |
|---|---|---|---|---|---|
| | | Oxygen amount {ppm} | Extremal statistics value {µm} | Ultrasonic evaluation method | |
| | | | | Number of inclusions (N) | Total length of inclusions (mm) |
| I | SUJ2 | 7 | 24 | 8 | 22 |
| II | | 9 | 26 | 6 | 64 |
| III | | 9 | 31 | 9 | 80 |
| IV | | 8 | 30 | 9 | 93 |
| V | | 9 | 32 | 15 | 110 |
| VI | | 13 | 48 | 40 | 302 |

**< Table 5 >**

| | Material | Result of ultrasonic flaw detection (Defect of 1 mm or more length) | Selection by ultrasonic wave | Life (number of flaking/number of test) |
|---|---|---|---|---|
| No.1 | Material of poor cleanliness | 4 N/kg | N | flaking in 4/10 (N) |
| No.2 | | | Y | No flaking (200 Hr or more) |
| No.3 | Usual material | 0.1 N/kg | N | flaking in 1/10 (N) |
| No.4 | | | Y | No flaking (200 Hr or more) |
| | | | | |

| | Material | Result of ultrasonic flaw detection (Defect of 1.2 mm or more length) | Selection by ultrasonic wave | Life (number of flaking/number of test) |
|---|---|---|---|---|
| No.5 | Material of poor cleanliness | 2N/kg | Y | flaking in 1/10 (N) |

**< Table 6 >**

| | Material | Result of ultrasonic flaw detection (Defect of 1 mm or more length) | Selection by ultrasonic wave | Life (number of flaking/number of test) |
|---|---|---|---|---|
| No.1 | Material of poor | 6 N/kg | N | flaking in 6/10(N) |
| No.2 | cleanliness | | Y | No flaking (200 Hr or more) |
| No.3 | Usual material | 0.2 N/kg | N | flaking in 1/10(N) |
| No.4 | | | Y | No flaking (200 Hr or more) |
| | | | | |

| | Material | Result of ultrasonic flaw detection (Defect of 1.2 mm or more length) | Selection by ultrasonic wave | Life (number of flaking/number of test) |
|---|---|---|---|---|
| No.5 | Material of poor cleanliness | 3N/kg | Y | flaking in 1/10(N) |

**< Table 7 >**

| No. | Steel species | Max inclusion length (mm) | Crack life (× 10⁶ rev) |
|---|---|---|---|
| Example 1 of the invention | SUJ2 | 0.25 | 100 or more |
| Example 2 of the invention | SCR420 | 0.32 | 100 or more |
| Example 3 of the invention | SCM435 | 0.38 | 99 |
| Example 4 of the invention | SUJ2 | 0.4 | 88 |
| Example 5 of the invention | SAE4320 | 0.55 | 84 |
| Example 6 of the invention | SUJ3 | 0.6 | 80 |
| Comparative Example 1 | SCR420 | 0.64 | 30 |
| Comparative Example 2 | SUJ2 | 0.72 | 12 |
| Comparative Example 3 | SCM435 | 1.11 | 10 |

### Industrial Applicability

As has been described above, according to the evaluation method for large-sized inclusions in a steel for use in bearing, since a round bar made of a steel for use in bearing as an object of evaluation and an ultrasonic probe are located in an ultrasonic transmission medium and the size and the number of large-sized inclusions present in a volume for flaw detection are measured by ultrasonic flaw detection and the existence probability of the large-sized inclusions in the steel for use in bearing as the object of evaluation is estimated, the existence probability of the large-inclusions in a larger volume for flaw detection can be estimated by conducting ultrasonic flaw detection simply and easily and an appropriate evaluation for large-sized inclusions can be conducted also for steels for use in bearing at high cleanliness.

Further, since the angle beam technique is used as the flaw detection method for ultrasonic flaw detection, smaller inclusions can be detected accurately, by which presence of the large-sized inclusions can be detected more accurately.

Further, by conducting the angle beam detection method at a flaw detection frequency of 15 MHz or lower, a deeper region can be detected, thereby capable of shortening the time for the flaw detection of large-sized inclusions.

Further, by adopting a normal beam technique using a focus type polymer probe as the ultrasonic probe for the flaw detection method of the ultrasonic flaw detection, finer large-sized inclusions can be detected to a deeper region, thereby capable of detecting the presence of large-sized inclusions more accurately.

Further, by conducting the normal beam detection at a flaw detection frequency of 30 MHz or lower, a deeper region can be detected, thereby capable of shortening the time for the flaw detection of large-sized inclusions.

## Claims

1. An evaluation method for large-sized inclusions in a steel for use in bearing, comprising
locating a round bar (11) formed of a steel for use in bearing as an object of evaluation and an ultrasonic probe (12) in an ultrasonic transmission medium,
measuring the size and the number of large-sized inclusions present in a volume for flaw detection by ultrasonic flaw detection,
obtaining a volume for flaw detection in a case where the ratio for the number of inclusions is stabilised,
conducting flaw detection for the obtained volume or more, and
estimating the probability for the existence of the large-sized inclusions in the steel for use in bearing as the object of evaluation.

2. An evaluation method for large-sized inclusions in a steel for use in bearing according to claim 1, wherein the flaw detection method for ultrasonic flaw detection is an angle beam technique.

3. An evaluation method for large-sized inclusions in a steel for use in bearing according to claim 2, wherein the angle beam technique is conducted at a flaw detection frequency of 15 MHz or lower.

4. An evaluation method for large-sized inclusions in a steel for use in bearing according to claim 1, wherein the flaw detection method for the ultrasonic flaw detection is a normal beam technique by using a focus type polymer probe as the ultrasonic probe.

5. An evaluation method for large-sized inclusions in a steel for use in bearing according to claim 4, wherein the normal beam technique is conducted at a flaw detection frequency of 30 MHz or lower.

## Patentansprüche

1. Auswerteverfahren für große Einschlüsse in einem Stahl zur Verwendung in einem Lager, umfassend
Anordnen einer runden Stange (11), welche aus einem Stahl zur Verwendung in einem Lager ausgebildet ist, als ein Objekt zur Auswertung und eine Ultraschallsonde (12) in einem Ultraschall-Übertragungsmedium,
Messen der Größe und der Anzahl von großen Einschlüssen, welche in einem Volumen vorliegen, zur Fehlstellenerfassung durch Ultraschall-Fehlstellenerfassung, Erhalten eines Volumens zur Fehlstellenerfassung in einem Fall, in welchem das Verhältnis für die Anzahl von Einschlüssen stabilisiert ist,
Ausführen von Fehlstellenerfassung für das erhaltene Volumen oder mehr, und Abschätzen der Wahrscheinlichkeit für das Vorliegen der großen Einschlüsse in dem Stahl zur Verwendung in einem Lager als das Objekt zur Auswertung.

2. Auswerteverfahren für große Einschlüsse in einem Stahl zur Verwendung in einem Lager nach Anspruch 1, wobei das Fehlstellenerfassungsverfahren für Ultraschall-Fehlstellenerfassung eine Winkelstrahltechnik ist.

3. Auswerteverfahren für große Einschlüsse in einem Stahl zur Verwendung in einem Lager nach Anspruch 2, wobei die Winkelstrahltechnik bei einer Fehlstellenerfassungsfrequenz von 15 MHz oder niedriger ausgeführt wird.

4. Auswerteverfahren für große Einschlüsse in einem Stahl zur Verwendung in einem Lager nach Anspruch 1, wobei das Fehlstellenerfassungsverfahren für die Ultraschall-Fehlstellenerfassung eine Normalstrahltechnik ist, unter Verwendung einer Fokustyp-Polymersonde als die Ultraschallsonde.

5. Auswerteverfahren für große Einschlüsse in einem Stahl zur Verwendung in einem Lager nach Anspruch 4, wobei die Normalstrahltechnik mit einer Fehlstellenerfassungsfrequenz von 30 MHz oder niedriger ausgeführt wird.

## Revendications

1. Procédé d'évaluation d'inclusions de grandes dimensions dans un acier destiné à être utilisé en roulement, comprenant
la localisation d'une barre ronde (11) formée d'un acier destiné à être utilisé en roulement comme un objet d'évaluation et une sonde ultrasonore (12) dans un milieu de transmission ultrasonore,
la mesure de la dimension et du nombre des inclusions de grandes dimensions qui sont présentes dans un volume pour la détection des défauts par la détection des défauts par ultrasons,
l'obtention d'un volume pour la détection des défauts dans un cas où le rapport pour le nombre d'inclusions est stabilisé,
la conduite de la détection des défauts pour le volume obtenu ou plus, et
l'estimation de la probabilité de l'existence des inclusions de grandes dimensions dans l'acier destiné à être utilisé en roulement comme l'objet d'évaluation.

2. Procédé d'évaluation d'inclusions de grandes dimensions dans un acier destiné à être utilisé en roulement selon la revendication 1, dans lequel le procédé de détection des défauts pour la détection des défauts par ultrasons est une technique de rayon incliné.

3. Procédé d'évaluation d'inclusions de grandes dimensions dans un acier destiné à être utilisé en roulement selon la revendication 2, dans lequel la technique de rayon incliné est réalisée à une fréquence de détection des défauts de 15 MHz ou plus bas.

4. Procédé d'évaluation d'inclusions de grandes dimensions dans un acier destiné à être utilisé en roulement selon la revendication 1, dans lequel le procédé de détection des défauts pour la détection des défauts par ultrasons est une technique de rayon normal en utilisant une sonde à focalisation polymère comme la sonde ultrasonore.

5. Procédé d'évaluation d'inclusions de grandes dimensions dans un acier destiné à être utilisé en roulement selon la revendication 4, dans lequel la technique de rayon normal est réalisée à une fréquence de détection des défauts de 30 MHz ou plus bas.
